(19) Europäisches Patentamt
European Patent Office
Office européen des brevets

(11) EP 4 791 089 A1

(12) EUROPEAN PATENT APPLICATION
published in accordance with Art. 153(4) EPC

(43) Date of publication:
**12.08.2026 Bulletin 2026/33**

(21) Application number: **24877385.5**

(22) Date of filing: **14.08.2024**

(51) International Patent Classification (IPC):
***H04W 52/02*** *(2009.01)* ***H04W 76/28*** *(2018.01)*
***H04W 72/0446*** *(2023.01)* ***H04W 72/29*** *(2023.01)*
***H04W 88/08*** *(2009.01)*

(52) Cooperative Patent Classification (CPC):
**H04W 52/02; H04W 72/04; H04W 72/0446; H04W 72/29; H04W 76/28; H04W 88/08**

(86) International application number:
**PCT/KR2024/012132**

(87) International publication number:
**WO 2025/079846 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.10.2023 KR 20230134692**

(71) Applicant: **Samsung Electronics Co., Ltd.**
**Suwon-si, Gyeonggi-do 16677 (KR)**

(72) Inventors:
- **SONG, Junhyuk**
  **Suwon-si Gyeonggi-do 16677 (KR)**
- **KANG, Seungwon**
  **Suwon-si Gyeonggi-do 16677 (KR)**
- **KHO, Youngsung**
  **Suwon-si Gyeonggi-do 16677 (KR)**
- **KIM, Chulmin**
  **Suwon-si Gyeonggi-do 16677 (KR)**
- **BAEK, Sangkyu**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) APPARATUS AND METHOD FOR CONTROLLING POWER REDUCTION MODE

(57) This near-real time (RT) radio access network intelligence controller (RIC) device may comprise: a transceiver; at least one processor; and a memory including instructions. The instructions, when executed individually or collectively by the at least one processor, instruct the apparatus to: transmit an RIC control message including a radio access network (RAN) configuration structure to an E2 node; and receive, from the E2 node, an RIC control acknowledge message responding to the RIC control message. The RAN configuration structure may include parameters for energy saving. The parameters may include at least one of discontinuous reception (DRX) configuration information and discontinuous transmission (DTX) configuration information of a cell related to the E2 node.

1000
1005
1010
Near-RT RIC
E2SM-CCC
Cell REPORT
Cell #1 ES on,
Cell #2 ES on
E2SM-CCC
Cell Configuration Control
1020
O-DU
Cell #1
Cell #2
1031
1032
E2SM-CCC
Cell Configuration REPORT
Cell #1 on, Cell #2 off

FIG. 10A

EP 4 791 089 A1

## Description

## [Technical Field]

The following descriptions relate to an apparatus and a method for controlling a power reduction mode.

## [Background Art]

In order to meet the increasing demand for wireless data traffic after the commercialization of 4G (4th generation) communication systems, efforts have been made to develop improved 5G (5th generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5th Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6th Generation (6G) era, efforts are being made to develop an improved 6G communication system to connect hundreds of billions of devices and objects and provide various services. For this reason, the 6G communication system is referred to as a system beyond 5G.

In the 6th Generation (6G) communication system, which is predicted to be realized around 2030, a maximum transmission speed is tera (i.e., 1,000 giga) bit per second (bps), and the wireless latency is 100 microseconds (μsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations

(HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In order to meet a demand for wireless data traffic, a 5G system, new radio (NR) (or next radio), has been commercialized, so that a service having a high data transmission rate may be provided to a user through the 5G system similarly to 4G, and wireless communication services having various objectives such as an Internet of Things and a service requiring high reliability for a specific purpose may be expected to be provided. In a system in which a current fourth generation communication system and a fifth generation system are mixed, open radio access network (O-RAN) established by operators and equipment providers defines E2 application protocol (E2AP) specification in an application protocol of an E2 interface between an E2 node and near-real time radio access network intelligence controller (Near-RT RIC).

**[Disclosure]**

**[Technical Solution]**

A device for a near-real time radio access network intelligence controller (Near-RT RIC) may comprise a transceiver. The device may comprise at least one processor. The device may comprise memory including instructions. The instructions, when executed by the at least one processor individually or collectively, may cause the device to transmit, to a E2 node, a RIC control message including radio access network (RAN) configuration structure. The instructions, when executed by the at least one processor individually or collectively, may cause the device to receive, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

A device for a E2 node may comprise a transceiver. The device may comprise at least one processor. The device may comprise memory including instructions. The instructions, when executed by the at least one processor individually or collectively, may cause the device to receive, from a near-real time radio access network intelligence controller (Near-RT RIC), a RIC control message including radio access network (RAN) configuration structure. The instructions, when executed by the at least one processor individually or collectively, may cause the device to transmit, to the Near-RT RIC, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

A method performed by a device for a near-real time radio access network intelligence controller (Near-RT RIC), the method may comprise transmitting, to a E2 node, a RIC control message including radio access network (RAN) configuration structure. The method may comprise receiving, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

A non-transitory computer-readable storage medium, when executed individually or collectively by at least one processor of a device for a near-real time radio access network intelligence controller (Near-RT RIC) comprising a transceiver, may store one or more programs including instructions that cause the device to transmit, to a E2 node, a RIC control message including radio access network (RAN) configuration structure. The non-transitory computer-readable storage medium, when executed individually or collectively by the at least one processor, may store one or more programs

including instructions that cause the device to receive, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

**[Description of the Drawings]**

FIG. 1 illustrates an example of a 4th generation (4G) Long Term Evolution (LTE) core system.
FIG. 2A illustrates an example of a 5 th generation (5G) non-standard alone (NSA) system.
FIG. 2B illustrates an example of an architecture for O-RAN.
FIG. 3 illustrates an example of a protocol stack of an E2 application protocol message in a wireless access network.
FIG. 4 illustrates an example of a connection between a base station and a radio access network intelligence controller (RIC) in a wireless access network.
FIG. 5 illustrates an example of a configuration of a device in a wireless access network.
FIG. 6 illustrates an example of a logical function related to an E2 message of an E2 node and an RIC in a wireless access network.
FIG. 7 illustrates examples of a function split between an E2 node and a RIC.
FIG. 8 illustrates an implementation example of an E2 node and a RIC.
FIG. 9 illustrates an example of a function split between a centralized unit (CU) and a RIC.
FIG. 10A illustrates examples of a method for controlling a cell associated with an E2 node by a near-real time radio access network intelligence controller (Near-RT RIC).
FIG. 10B illustrates examples of a method for controlling a power reduction mode of a cell associated with an E2 node by the Near-RT RIC.
FIG. 10C illustrates an example of a graph for power consumption of a network according to a power reduction mode of a cell.
FIG. 11 illustrates an example of configuration information for a power reduction mode of a cell.
FIG. 12 illustrates an example of signaling for a method for controlling a power reduction mode of a cell associated with an E2 node by the Near-RT RIC.
FIG. 13 illustrates an example of an operation flow for a method for controlling a power reduction mode of a cell associated with an E2 node by the Near-RT RIC.

[**Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

The terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms referring to an operation state (e.g., step, operation, procedure), terms referring to data (e.g., packet, message, user stream, information, bit, symbol, codeword), terms referring to a channel, terms referring to a network entity (e.g., distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a device component, and the like, which are used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a

particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, unless explicitly stated otherwise, 'A' to 'B' refers to at least one of elements from A (including A) to B (including B). Hereinafter, 'C' and/or 'D' means including at least one of 'C' or 'D', that is, {'C', 'D', and 'C' and 'D'}.

Hereinafter, the present disclosure relates to a control procedure between a device in a radio access network (RAN) and a device controlling the RAN in a wireless communication system. The present disclosure relates to a procedure, a message, and a method for enabling an E2 node to perform control over a power reduction mode of a cell of the E2 node and terminals in the cell, by providing, on an E2 interface, configuration information for driving the power reduction mode of the cell associated with the E2 node, from a RIC RAN intelligent controller to the E2 node. The present disclosure describes various embodiments using terms used in some communication specifications (e.g., 3rd Generation Partnership Project (3GPP), extensible radio access network (xRAN), open radio access network (O-RAN)), but this is only an example for description. Various embodiments of the present disclosure may be easily modified and applied in other communication systems.

With the commercialization of 4$^{th}$ generation (4G)/5$^{th}$ generation (5G) communication systems (e.g., new radio (NR)), differentiated service support for users in virtualized networks has become required. 3GPP is a joint research project among mobile communication-related organizations aimed at developing third-generation mobile communication system standards that are globally applicable within a scope of IMT-2000 project of the International Telecommunication Union (ITU). 3GPP was established in December 1998, and 3GPP standards are based on advanced GSM standards, and encompass radio, core network, and service architecture in the scope of standardization. Accordingly, open radio access network (O-RAN) newly defines radio unit (RU), digital unit (DU), central unit (CU)-control plane (CP), and CU-user plane (CU-UP), which are nodes constitute 3GPP network entity (NE) and a base station, as O-RAN (O)-RU, O-DU, O-CU-CP, and O-CU-UP, respectively, and further standardized near-real-time (NRT) radio access network intelligent controller (RT). The present disclosure is for supporting an operator specific service model in an E2 interface in which the RIC requests a service from an O-DU, O-CU-CP, or O-CU-UP. Herein, O-RU, O-DU, O-CU-CP, and O-CU-UP may be understood as objects constituting an RAN capable of operating according to Othe -RAN standard, and may be referred to as an E2 node. An interface with the objects constituting the RAN capable of operating according to O -RAN standard between the RIC and E2 nodes utilizes E2 application protocol (E2AP).

The RIC is a logical node capable of collecting information on a cell site where a terminal and O-DU, O-CU-CP or O-CU-UP transmit and receive. The RIC may be implemented in a server format that is centrally located in one physical location. Connections between O-DU and RIC, O-CU-CP and RIC, and O-CU-UP and RIC may be established through Ethernet. To this end, an interface standard for communication between O-DU and RIC, O-CU-CP and RIC, and O-CU-UP and RIC have become necessary, and a message standard for E2-DU, E2-CU-CP, and E2-CU-UP and the definition of a procedure between RIC and O-DU, O-CU-CP, and O-CU-UP are required. In particular, differentiated service support for users is required in a virtualized network, and by centralizing call processing messages/functions generated in O-RAN to RIC, a functional definition of messages of E2-DU, E2-CU-CP, and E2-CU-UP to support services for wide cell coverage is required.

For example, the RIC (or Near-RT RIC) may perform control of the E2 node. For example, the RIC may cause E2 REPORT services and E2 CONTROL services of the E2 node by performing the control. For example, the E2 REPORT services and the E2 CONTROL services may be included in a RAN function for cell configuration and control (CCC) of the E2 node. For example, the E2 REPORT services may include reporting of node level configuration information in the E2 node and reporting of cell level configuration information in the E2 node. For example, the E2 REPORT services may be transmitted through a RIC indication message. Also, for example, the E2 CONTROL services may include node level configuration and control in the E2 node and cell level configuration and control in the E2 node. For example, the E2 CONTROL services may be transmitted through a RIC control message.

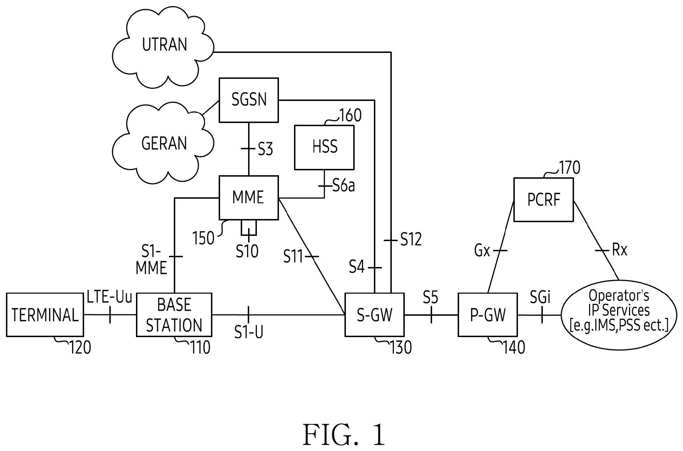

Referring to the above description, the RIC may perform control for each node or for each cell of the E2 node. The E2 node may control one or more cells (or one or more O-RU). For example, the one or more cells (or the one or more O-RU) may be associated with the E2 node. For example, in a case that the E2 node is an O-DU, the O-DU may control the one or more cells (or the one or more O-RU). Each of the one or more cells may be used for providing a service to one or more terminals (e.g., a terminal 120 of FIG. 1).

A base station (e.g., a base station 110 of FIG. 1) may control a mode of a terminal (e.g., a terminal 120 of FIG. 1) to reduce power consumption of a network. For example, the base station may be included in the E2 node. For example, the mode for reducing the power consumption may be referred to as a power reduction mode, a sleep mode, or a sleep state. For example, the power reduction mode may be activated according to configuration of discontinuous reception (DRX) and discontinuous transmission (DTX). The base station may control DRX/DTX for each terminal in the base station. For example, the base station may control DRX/DTX for each terminal through RRC signaling. Also, the base station may control the DRX/DTX for each cell configured in the base station. For example, the base station may control the DRX/DTX

for each cell through system information. For example, the system information may include SIB1. Hereinafter, the DRX/DTX for each cell may be referred to as cell DRX/DTX. The DRX/DTX being controlled for each cell may be understood as the DRX/DTX being controlled for all terminals in the cell. At this time, all of the terminals may indicate a terminal supporting cell DRX/DTX (or a terminal supporting network energy saving (NES).

Referring to the above description, the base station may control DRX/DTX for each terminal or for each cell. When the base station controls the DRX/DTX for each cell, it may be difficult for the base station to identify whether configured cell DRX/DTX configuration information provides optimal power consumption for a cell of the base station. In addition, the cell DRX/DTX configuration information configured by the base station may not consider capability information of a terminal in the cell. In other words, the cell DRX/DTX configuration information configured for each cell by the base station may not be optimized to reduce power consumption in a network.

Hereinafter, an apparatus and a method according to embodiments of the present disclosure may provide cell DRX/DTX configuration information provided from the RIC to the E2 node (e.g., O-DU). The RIC may calculate (or generate) the cell DRX/DTX configuration information for a network, based on information of the E2 node (e.g., configuration information) and information of terminals in a cell associated with the E2 node (e.g., capability information). Based on the calculated cell DRX/DTX configuration information provided from the RIC to the E2 node, the RIC may control a power reduction mode (or a sleep mode, or a sleep state) of a network (e.g., the E2 node and a terminal connected to the E2 node). Accordingly, the RIC may support an optimal power reduction mode in the network.

FIG. 1 illustrates an example of a 4$^{th}$ generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides the terminal 120 with wireless access. For example, the base station 110 is a device that performs scheduling by collecting state information such as a buffer state, available transmission power, and a channel state of the terminal 110. The base station 110 has a coverage defined as a certain geographical area based on a distance capable of transmitting a signal. The base station 110 is connected to the MME 150 through an S1-MME interface. In addition to the base station, the base station 110 may be referred to as an 'access point (AP)', 'eNodeB (eNB)', 'wireless point', 'transmission/reception point (TRP)', or another term having an equivalent technical meaning.

The terminal 120 is a device used by a user and performs communication with the base station 110 through a wireless channel. In some cases, the terminal 120 may be operated without the user's involvement. For example, the terminal 120 which is a device performing machine type communication (MTC), may not be carried by the user. In addition to the terminal, the terminal 120 may be referred to as 'user equipment (UE)', 'mobile station', 'subscriber station', 'customer-premises equipment (CPE)', 'remote terminal', 'wireless terminal', or 'user device' or another term having an equivalent technical meaning.

The S-GW 130 provides a data bearer and creates or controls the data bearer in accordance with a control of the MME 150. For example, the S-GW 130 processes a packet arriving from the base station 110 or a packet to be forwarded to the base station 110. In addition, the S-GW 130 may serve as an anchor when handing over between base stations of the terminal 120. The P-GW 140 may function as a connection point with an external network (e.g., the Internet). In addition, the P-GW 140 assigns an Internet Protocol (IP) address to the terminal 120 and serves as an anchor for the S-GW 130. In addition, the P-GW 140 may apply a Quality of Service (QoS) policy of the terminal 120 and manage account data.

The MME 150 manages mobility of the terminal 120. In addition, the MME 150 may perform authentication, bearer management, and the like for the terminal 120. That is, the MME 150 is responsible for mobility management and various control functions for the terminal. The MME 150 may be linked with a serving GPRS support node (SGSN).

The HSS 160 stores key information and a subscriber profile for authentication of the terminal 120. The key information and the subscriber profile are transmitted from the HSS 160 to the MME 150 when the terminal 120 connects to a network.

The PCRF 170 defines a rule for a policy and charging. The stored information may be transferred from the PCRF 170 to the P-GW 140, and the P-GW 140 may perform control (e.g. QoS management, charging, and the like) for the terminal 120 based on the information provided from the PCRF 170.

A carrier aggregation (hereinafter, CA) technology is a technology that combines a plurality of component carriers and increases a frequency usage efficiency in terms of a terminal or a base station, as a terminal transmits and receives a signal using simultaneously the plurality of component carriers. Specifically, according to the CA technology, a terminal and a base station may transmit and receive a signal using a wideband by using the plurality of component carriers in an uplink (UL) and a downlink (DL), respectively. Each component carrier is located within a different frequency band. Hereinafter, the uplink refers to a communication link through which a terminal transmits a signal to a base station, and the downlink refers to a communication link through which a base station transmits a signal to a terminal. At this time, the number of uplink component carriers and downlink component carriers may be different from each other.

Dual connectivity or multi connectivity is a technology in which one terminal is connected to multiple different base

stations to simultaneously transmit and receive signals using carriers in multiple base stations located in different frequency bands, thereby increasing frequency usage efficiency in terms of the terminal or base station. A terminal may be simultaneously connected to a first base station (e.g., a base station that provides a service using LTE technology or 4th generation mobile communication technology) and a second base station (e.g., a base station that provides a service using new radio (NR) technology or 5th generation (5G) mobile communication technology) to transmit and receive traffic. In this case, frequency resources used by each base station may be located in different bands. As described above, a method of operating based on the dual connection method of LTE and NR may be referred to as 5G non-standalone (NSA).

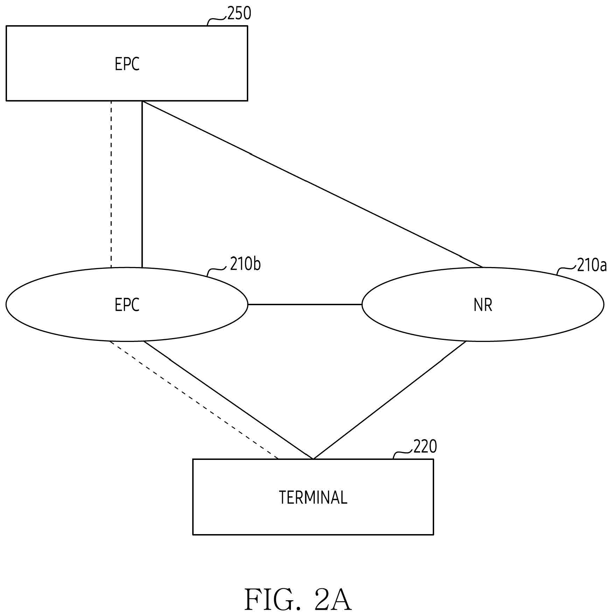

FIG. 2A illustrates an example of a 5th generation (5G) non-standard alone (NSA) system.

Referring to FIG. 2A, the 5G NSA system includes an NR RAN 210a, an LTE RAN 210b, a terminal 220, and an evolved packet core (EPC) 250. The NR RAN 210a and the LTE RAN 210b may be connected to the EPC 150, and the terminal 220 may receive a service from either or both of the NR RAN 210a and the LTE RAN 210b simultaneously. The NR RAN 210a includes at least one NR base station, and the LTE RAN 210b includes at least one LTE base station. Herein, the NR base station may be referred to as a '5th generation node (5G node)', 'next generation nodeB (gNB)', or another term having an equivalent technical meaning. In addition, the NR base station may have a structure separated into a central unit (CU) and a digital unit (DU), and in addition, the CU may have a structure separated into a CU-control plane (CP) unit and a CU-user plane (UP) unit.

In a structure such as FIG. 2A, the terminal 220 may perform a radio resource control (RRC) connection through a first base station (e.g., a base station belonging to the LTE RAN 210b) and may be serviced with a function (e.g., connection management, mobility management, and the like) provided in a control plane. In addition, the terminal 220 may be provided with additional radio resources for transmitting and receiving data through a second base station (e.g., a base station belonging to the NR RAN 210a). This dual connectivity technology using LTE and NR may be referred to as evolved universal terrestrial radio access (E-UTRA) - NR dual connectivity (EN-DC). Similarly, a dual connectivity technology in which the first base station uses the NR technology and the second base station uses the LTE technology is referred to as NR - E-UTRA dual connectivity (NE-DC). In addition, various embodiments may be applied to various forms of multiple connectivity and a carrier aggregation technology. In addition, various embodiments may be applied even if a first system using a first communication technology and a second system using a second communication technology are implemented in one device, or a first base station and a second base station are located in the same geographical location.

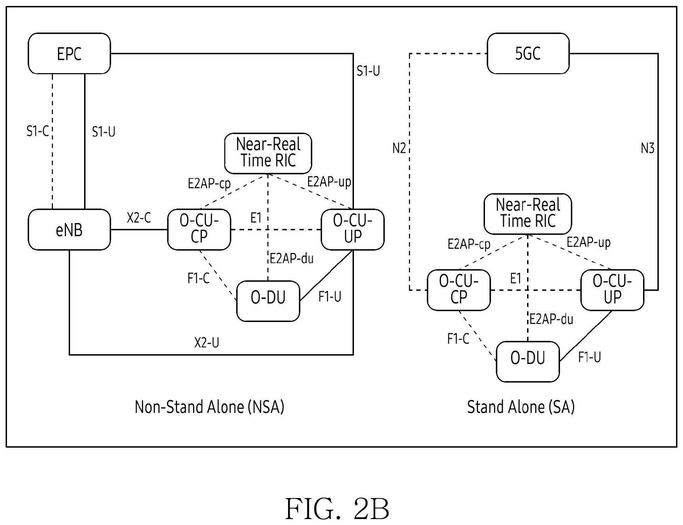

FIG. 2B illustrates an example of an architecture for an O-RAN.

For the purpose of E2-SM-key performance indicator (KPI) monitoring (KPIMON) of E2 service model, an O-RAN non-stand alone mode in a multi-connectivity operation using E-UTRA and NR radio access technology is considered, and it is assumed that the E2 node is in an O-RAN stand alone mode.

Referring to FIG. 2B, in a deployment of the O-RAN non-stand alone mode, the eNB is connected to the EPC through an S1-C/S1-U interface and to the O-CU-CP through an X2 interface. For a deployment of the O-RAN standalone mode, the O-CU-CP may be connected to a 5G core (5GC) through an N2/N3 interface.

Currently, discussions are underway for the improvement and enhancement of the initial 5G mobile communication technology by considering services that 5G mobile communication technology aimed to support, and physical layer standardization is in progress for technologies such as vehicle-to-everything (V2X), which assists autonomous vehicles in driving decisions based on the vehicle's location and status information provided by the vehicle and enhances user convenience, new radio unlicensed (NR-U), which is intended for system operation that complies with various regulatory requirements in unlicensed bands, NR terminal low power consumption technology (UE Power Saving), Non-Terrestrial Network (NTN), which is a terminal-satellite direct communication for securing coverage in areas where communication with terrestrial networks is impossible, and Positioning.

Furthermore, standardization in the field of wireless interface architecture and protocols is in progress for technologies such as Industrial Internet of Things (IIoT), which supports new services through integration and convergence with other industries, Integrated Access and Backhaul (IAB), which provides nodes to expand network service areas by integrally supporting wireless backhaul links and access links, Mobility Enhancement, which includes conditional handover and dual active protocol stack (DAPS) handover, and 2-step RACH for NR, which simplifies the random access procedure, and standardization in the field of system architecture and services is also in progress for technologies such as 5G baseline architecture (e.g., Service based Architecture, Service-based Interface) for grafting network functions virtualization (NFV) and software-defined networking (SDN) technology and mobile edge computing (MEC) on which services is provided based on a location of the terminal.

When such 5G mobile communication system is commercialized, connected devices, which are increasing explosively, will be connected to the communication network, and accordingly, it is expected that the enhancement of the functions and performance of the 5G mobile communication system and the integrated operation of connected devices will be required. To this end, new research will be conducted on eXtended Reality (XR) to efficiently support augmented reality (AR), virtual reality (VR), and mixed reality (MR), 5G performance improvement and complexity reduction utilizing artificial intelligence (AI) and machine learning (ML), AI service support, metaverse service support, and drone communication.

Furthermore, the advancement of such 5G mobile communication system could serve as the foundation for the

development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although FIGS. 1 to 2B illustrate 4G and/or 5G environments, this description does not limit the scope of the communication environments of the embodiments of the present disclosure. The technical principles according to the embodiments of the present disclosure may also be applied to 6G and post-6G communication technologies and network environments.

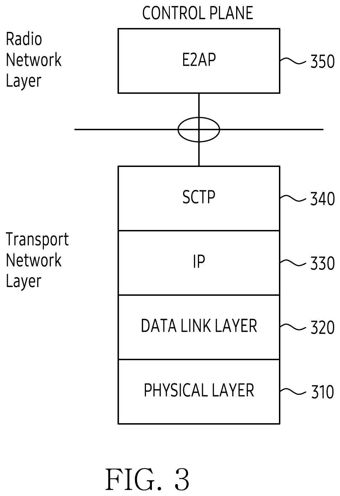

FIG. 3 illustrates an example of a protocol stack of an E2 application protocol message in a wireless access network.

Referring to FIG. 3, a control plane includes a transport network layer and a radio network layer. The transport network layer includes a physical layer 310, a data link layer 320, an internet protocol (IP) 330, and a stream control transmission protocol (SCTP) 340.

The wireless network layer includes E2AP 350. The E2AP 350 is used to transmit a subscription message, an indication message, a control message, a service update message, and a service query message, and they are transmitted in a higher layer of the SCTP 340 and the IP 330.

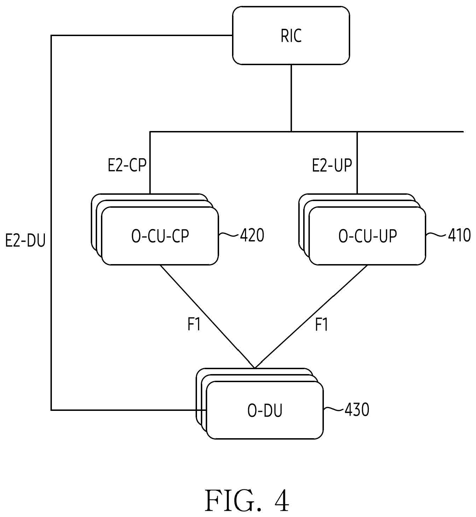

FIG. 4 illustrates an example of a connection between a base station and a radio access network intelligence controller (RIC) in a wireless access network.

Referring to FIG. 4, an RIC 440 is connected to O-CU-UP 410, O-CU-CP 420, and O-DU 430. The RIC 440 is a device for customizing RAN functionality for new services or regional resource optimization. The RIC 440 may provide functions such as network intelligence (e.g., policy enforcement, handover optimization), resource assurance (e.g., radio-link management, advanced self-organized-network (SON)), and resource control (e.g., load balancing, slicing policy). The RIC 440 may perform communication with O-CU-CP 420, O-CU-UP 410, O-DU 430. The RIC 440 may be connected to each node through E2-CP, E2-UP, E2-DU interfaces. In addition, an interface between O-CU-CP and DU, and between O-CU-UP and DU may be referred to as F1 interface. In the following description, DU and O-DU, CU-CP and O-CU-CP, CU-UP and O-CU-UP may be used interchangeably.

FIG. 4 illustrates one RIC 440, but a plurality of RICs may be present in various embodiments. The plurality of RICs may be implemented with a plurality of hardware located at the same physical location or may be implemented through virtualization using one hardware.

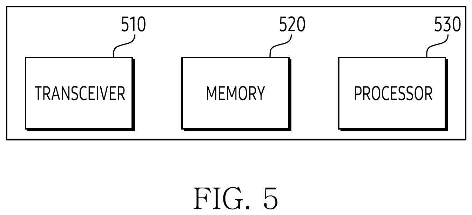

FIG. 5 illustrates an example of a configuration of a device in a wireless access network.

A structure exemplified in FIG. 5 may be understood as a configuration of a device having a function of at least one among the near-RT RIC, non-RT RIC, O-CU-CP, O-CU-UP, and O-DU of FIG. 5. The terms '...unit', '...device', and the like used below mean a unit processing at least one function or operation, and it may be implemented by hardware or software, or a combination of hardware and software.

Referring to FIG. 5, a core network device is configured to include a transceiver 510, memory 520, and a processor 530.

The transceiver 510 provides an interface for performing communication with other devices in a network. That is, the transceiver 510 converts a bit stream transmitted from the core network device to another device into a physical signal, and converts a physical signal received from another device into a bit stream. That is, the transceiver 510 may transmit and receive a signal. Accordingly, the transceiver 510 may be referred to as a communication unit, a modem, a transmit unit, a receive unit, or a transmit/receive unit. In this case, the transceiver 510 enables the core network device to communicate with other devices or systems via a backhaul connection (e.g., a wired backhaul or a wireless backhaul) or via a network. Although only one transceiver 510 is illustrated in FIG. 5, the device may include one or more transceivers.

The memory 520 stores data such as a basic program, an application program, and setting information for operations of a device (or core network device). The memory 520 may be referred to as a storage unit. The memory 520 may be composed of a volatile memory, a nonvolatile memory, or a combination of a volatile memory and a nonvolatile memory. In addition, the memory 520 provides stored data according to a request of the processor 530.

The processor 530 controls overall operations of a network element (NE) device such as E2 node or Near-RT RIC. For example, the processor 530 transmits and receives signals through the transceiver 510. In addition, the processor 530 records and reads data in the memory 520. Although only one processor 530 is illustrated in FIG. 5, the device may include one or more processors. According to various embodiments, the processor 530 may control the device to perform operations according to various embodiments described in the present disclosure.

For example, the processor 530 may include various processing circuitry and/or a plurality of processors. For example, the term "processor" used in this document including a claim scope may include various processing circuitry including at least one processor, and at least one or more of the at least one processor may be configured to individually and/or collectively perform various functions described below in a distributed manner. As used below, when "a processor," "at least one processor," and "one or more processors" are described as being configured to perform various functions, these terms encompass situations in which, for example without limitation, one processor performs some of cited functions and another processor(s) performs other cited functions, and also situations in which one processor may perform all of the cited functions. Additionally, the at least one processor may include a combination of processors that performs, for example, enumerated/disclosed various functions in a distributed manner. The at least one processor may execute program instructions to achieve or perform various functions.

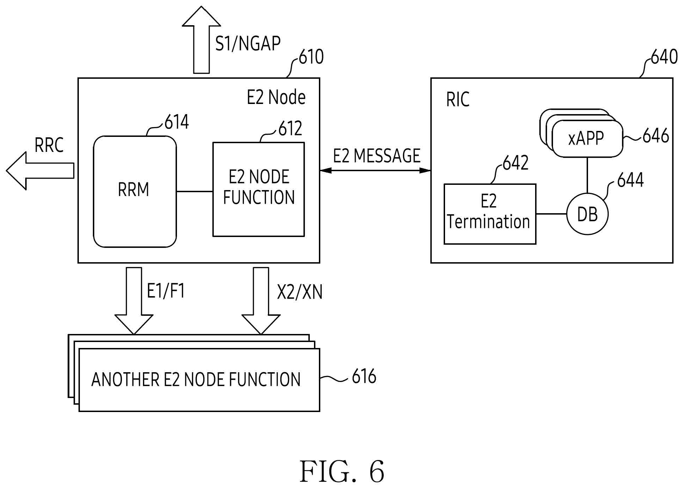

FIG. 6 illustrates an example of a logical function related to an E2 message of an E2 node and an RIC in a wireless access network. The E2 message may be understood as referring to messages transmitted through an E2 interface.

Referring to FIG. 6, an RIC 640 and an E2 node 610 may transmit or receive an E2 message between each other. For example, the E2 node 610 may be O-CU-CP, O-CU-UP, O-DU, or a base station. A communication interface of the E2 node may be determined according to a type of the E2 node 610. For example, the E2 node 610 may communicate with another E2 node 616 through an E1 interface or an F1 interface. In addition, for example, the E2 node 610 may communicate with the E2 node 616 through an X2 interface or an XN interface. In addition, for example, the E2 node 610 may perform communication through an S1 interface or a next generation application protocol (NGAP) interface (i.e., an interface between a next generation (NG) RAN node and the AMF).

The E2 node 610 may include an E2 node function 612. The E2 node function 612 corresponds to a specific application S/W (xApp) 646 installed in the RIC 640. For example, in a case of a KPI monitor, a KPI monitor collection S/W is installed in the RIC 640, and the E2 node 610 may include an E2 node function 612 that generates KPI parameters and then transmits an E2 message including the KPI parameter to an E2 termination 642 located in the RIC 640. The E2 node 610 may include a radio resource management (RRM) 614. The E2 node 610 may manage resources provided to a wireless network for a terminal.

The E2 termination 642 located in the RIC 640 is a termination of the RIC 640 for the E2 message, and performs a function of interpreting the E2 message transmitted by the E2 node 610 and then transmitting the E2 message to the xApp 646. A database DB 644 located in the RIC 640 may be used for the E2 termination 642 or the xApp 646. The E2 node 610 illustrated in FIG. 6 is a termination of at least one interface and may be understood as a termination of messages transmitted to a terminal, a peripheral base station, and a core network.

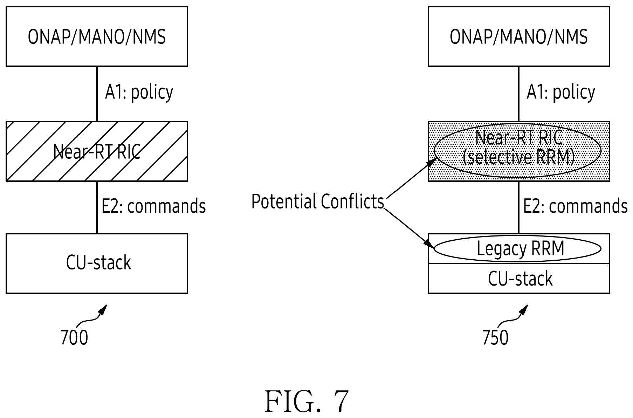

FIG. 7 illustrates examples of a function split between an E2 node and an RIC.

O-RAN standard provides a function split between an E2 node and an RIC. For example, the E2 node may be a CU. The RIC may be a Near RT RIC. The RIC may be connected to open network automation platform (ONAP)/management and orchestration (MANO)/network management system (NMS) through the A1 interface. The RIC may be connected to the E2 node through an E2 interface. The E2 interface may transmit commands. A function split option may include a function split 700 that manages the entire radio resource management (RRM) in the near-RT RIC and a function split 750 that selectively manages the RRM in the near-RT RIC.

According to the WG3 decision of the meeting on 2019/01/16, the Near-RT RIC is expected to support an E2 as an open logical interface aimed at a multi-vendor environment, regardless of the implementation of a specific RRC-RRM algorithm located in the Near-RT RIC. In the present disclosure, E2 Service Model Radio Interface Control (E2SM-RIC), which is paired with E2SM-NI capable of performing injection/modification/configuration of Per UE RRC messages for each I/F and network entity (NE), may be proposed. In other words, in the function split 750, the Near-RT RIC may be gradually improved in a direction of the function split 700. The E2 may evolve into an open logical interface, which is independent of the implementation of a specific RRC-RRM algorithm in the Near-RT RIC while targeting a multi-vendor environment.

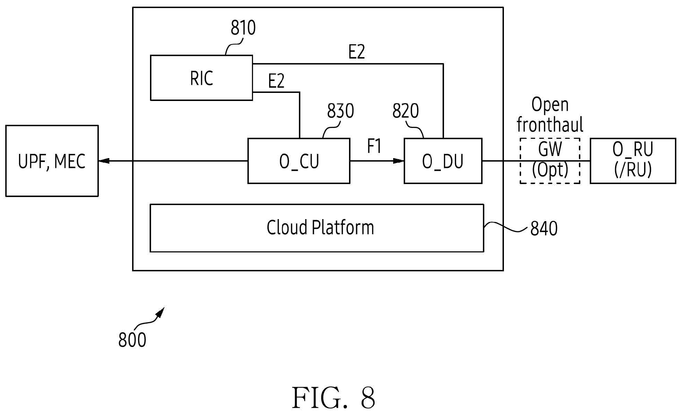

FIG. 8 illustrates an example of an implementation example of an E2 node and an RIC.

Referring to FIG. 8, in a scenario of an implementation example 800, an E2 node (e.g., the O-DU, the O-CU) and an RIC may be virtualized on a cloud platform (e.g., an open chassis and blade specification edge cloud) and configured on a device (e.g., a server). Such a scenario may support a deployment in dense urban areas with abundant fronthaul capacity that allows a BBU function to be pooled at a central location, with low latency enough to meet O-DU latency requirements. Therefore, there may be no need to attempt to centralize the Near-RT RIC beyond the limit of centralizing O-DU function. According to an embodiment, E2SM-RIC may be optimized for an O-RAN deployment scenario in which Near-RT RIC, O-CU, and O-DU are implemented on an O-Cloud platform.

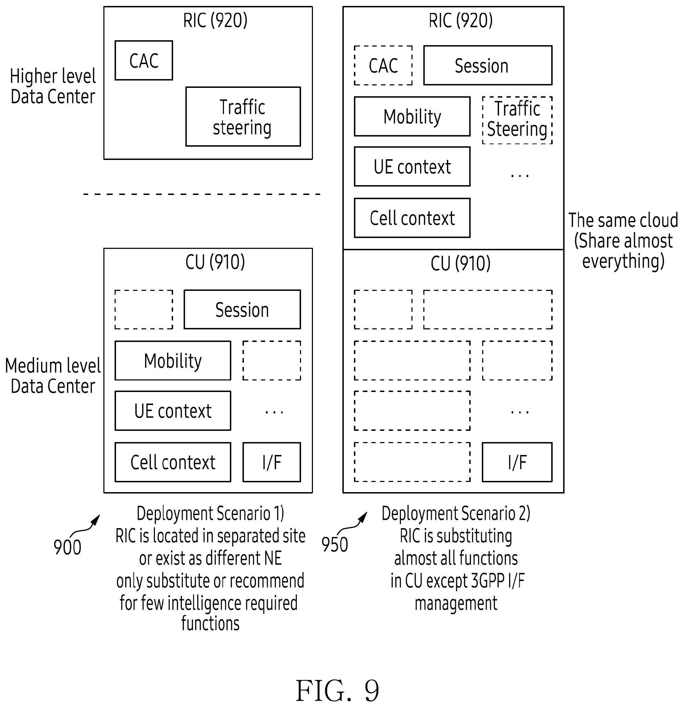

FIG. 9 illustrates examples of function split between a centralized unit (CU) 910 and an RIC 920 according to embodiments. Referring to FIG. 9, function splits may be performed according to a deployment scenario #1 (e.g., 900) or a function deployment scenario #2 (e.g., 950).

The deployment scenario #1 900: RIC is located at a separate site or exists only as another network element (NE), replacing or recommending some intelligence critical functions (e.g., traffic steering, cell admission control (CAC)

function).

The deployment scenario #2 950: RIC may replace almost all functions (e.g. mobility function, session function, UE context function, cell context function) of the CU except 3GPP I/F management. In the deployment scenario #2 (e.g., 950), the RIC may be implemented as a device such as a CU (e.g., a server device). As an example, in the same cloud, the RIC may share all functions with the CU.

In FIG. 9, two scenarios are illustrated, but other scenarios may be applied. As an example, in the deployment scenario #1 900, a Mobility function may be performed by the RIC 920 rather than the CU 910. In addition, as an example, in the deployment scenario #1 900, a UE context function may be performed by the RIC rather than the CU. In addition, as an example, in the deployment scenario #1 900, a session setup function may be performed by the RIC 920 rather than the CU 910.

E2 interfaces E2AP procedures may be classified into two modules. Services through the E2AP may indicate services that an E2 node (e.g., the E2 node 610 of FIG. 6) provides to a Near-RT RIC (e.g., the RIC 640 of FIG. 6). For example, the two modules may include RIC functional procedures and global procedures. For example, a RIC functional procedures module may be used to deliver application-specific messages between applications of the Near-RT RIC and a target RAN function in the E2 node. For example, a global procedures module may include procedures that are not directly associated with a specific application.

For example, the RIC functional procedures may include a RIC subscription procedure, a RIC subscription delete procedure, a RIC subscription delete required procedure, a RIC indication procedure, a RIC control procedure, a RIC subscription modification procedure, a RIC subscription modification required procedure, and a RIC query procedure. For example, the global procedures may include an E2 setup procedure, a reset procedure, an error indication procedure, a RIC service update procedure, the E2 node configuration update procedure, an E2 connection update procedure, and an E2 removal procedure. However, embodiments of the present disclosure are not limited thereto.

For example, control of the E2 node by the Near-RT RIC may include at least one of radio bearer control, connected mode mobility control, dual connectivity (DC) control, carrier aggregation (CA) control, or idle mode mobility control of the Near-RT RIC. However, an embodiment of the present disclosure is not limited thereto. For example, the control may be related to a style (or a style type) of the Near-RT RIC.

In an apparatus and a method according to embodiments of the present disclosure, the Near-RT RIC may provide cell DRX/DTX configuration information to the E2 node. For example, the Near-RT RIC may calculate (or generate) the cell DRX/DTX configuration information for a network, based on information of the E2 node (e.g., configuration information) and information of terminals in a cell associated with the E2 node (e.g., capability information). Based on the calculated cell DRX/DTX configuration information provided from the Near-RT RIC to the E2 node, the Near-RT RIC may control a power reduction mode (or a sleep mode, or a sleep state) of a network (e.g., the E2 node and a terminal connected to the E2 node). Accordingly, the RIC may support an optimal power reduction mode in the network.

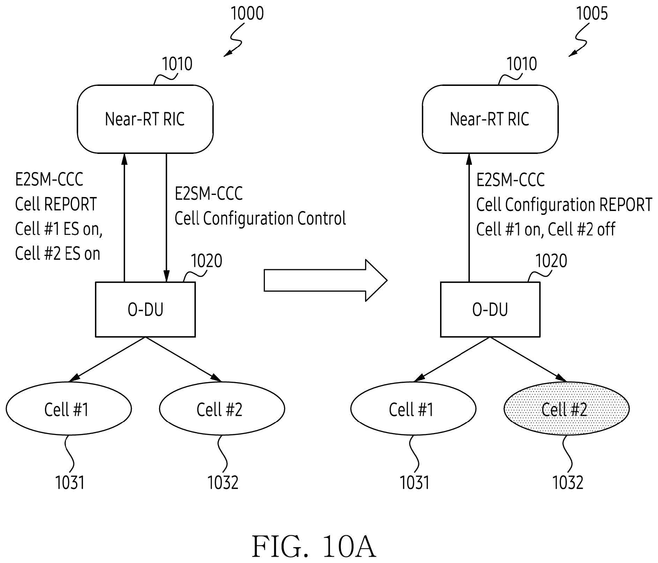

FIG. 10A illustrates examples of a method for controlling a cell associated with an E2 node by a near-real time radio access network intelligence controller (Near-RT RIC).

Referring to FIG. 10A, a Near-RT RIC 1010 illustrates examples 1000 and 1005 for controlling switch on/off of a cell (or an O-RU) associated with an O-DU 1020 for energy saving. The Near-RT RIC 1010 of FIG. 10A may include at least a portion of the RIC 640 of FIG. 6. The O-DU 1020 of FIG. 10A may be included in the E2 node 610 of FIG. 6. For example, the O-DU 1020 of FIG. 10A may be an example of the E2 node 610. In other words, the O-DU 1020 may be referred to as the E2 node.

For example, the energy saving may be referred to as network energy saving (NES). For example, the NES may indicate a method for reducing energy consumption of nodes (O-RU, O-DU 1020, O-CU) as well as a logical component (e.g., a cell, a carrier, a gNB) of a network, within a range satisfying a required key performance indicator (KPI). For example, the NES may include carrier and cell switch off/on, RF channel reconfiguration off/on, advanced sleep mode selection, and O-Cloud resource energy saving mode. For example, the carrier and cell switch off/on may indicate switch off/on of a cell (or an O-RU) associated with the O-DU 1020. For example, the RF channel reconfiguration off/on may indicate off/on of Tx/Rx arrays in the O-RU. For example, the advanced sleep mode selection may indicate a method for selecting sleep modes supported by an O-RU and an E2 node (e.g., the O-DU 1020 or the O-CU). For example, the sleep modes may be activated periodically for cells associated with the O-DU 1020. For the advanced sleep mode, the O-DU 1020 may configure cell DRX/DTX. As the cell DRX/DTX is used, the NES according to the advanced sleep mode may be provided. For example, the O-Cloud resource energy saving mode may indicate energy saving based on resource utilization of a core network.

Referring to the example 1000, the O-DU 1020 may perform reporting on cells 1031 and 1032 associated with the O-DU 1020 to the Near-RT RIC 1010. In the example 1000 of FIG. 10A, it is illustrated that two cells 1031 and 1032 are configured for the O-DU 1020, but an embodiment of the present disclosure is not limited thereto. For example, one cell or three or more cells may be configured for the O-DU 1020. For example, the O-DU 1020 may transmit, to the Near-RT RIC 1020, the report indicating that an energy saving function of the first cell 1031 is on and an energy saving function of the second cell 1032 is on. For example, the report may be referred to as an E2SM-CCC cell report or a cell report. For

example, the O-DU 1020 may transmit the report through a RIC indication procedure. For example, the O-DU 1020 may transmit the report through a RIC indication message. For example, the energy saving function of the first cell 1031 being on may indicate that a function for the NES may be used in the first cell 1031. Also, the energy saving function of the second cell 1032 being on may indicate that a function for the NES may be used in the second cell 1032. In addition, for example, the report may indicate that a switch of the first cell 1031 is on and a switch of the second cell 1032 is on.

Referring to the example 1000, the Near-RT RIC 1010 may transmit control information to the O-DU 1020. For example, the Near-RT RIC 1010 may transmit the control information to the O-DU 1020, in response to recognizing that cells 1031 and 1032 of the O-DU 1020 provide the energy saving function based on the received report. For example, the control information may be referred to as E2SM-CCC cell configuration control or cell configuration control. For example, the Near-RT RIC 1010 may transmit the control information through a RIC control procedure. For example, the Near-RT RIC 1010 may transmit the control information through a RIC control message. For example, the control information may indicate a change of a switch of a second cell 1032 from on to off.

Referring to the above description, the example 1000 in which the report is provided through the RIC indication message and the control information is provided through the RIC control message is described, but an embodiment of the present disclosure is not limited thereto. For example, the report or the control information may be provided through a message of another procedure.

Referring to example 1005, the O-DU 1020 may change a cell configuration based on the received control information. For example, the O-DU 1020 may change a switch of the second cell 1032 to off, based on the control information indicating to change the switch of the second cell 1032 from on to off. The O-DU 1020 may perform reporting on a changed state (e.g., switch off) of the second cell 1032. In a case that the switch of the second cell 1032 is off, until an additional configuration change is performed, the second cell 1032 may maintain the changed state (e.g., switch off).

For example, the O-DU 1020 may transmit, to the Near-RT RIC 1010, the report indicating that the first cell 1031 is on and the second cell 1032 is off. For example, the report may be referred to as an E2SM-CCC cell configuration report or a cell configuration report. For example, the O-DU 1020 may transmit the report through a RIC indication procedure. For example, the O-DU 1020 may transmit the report through a RIC indication message.

Referring to the above description, the example 1005 in which the report is provided through the RIC indication message is described, but an embodiment of the present disclosure is not limited thereto. For example, the report may be provided through a message of another procedure.

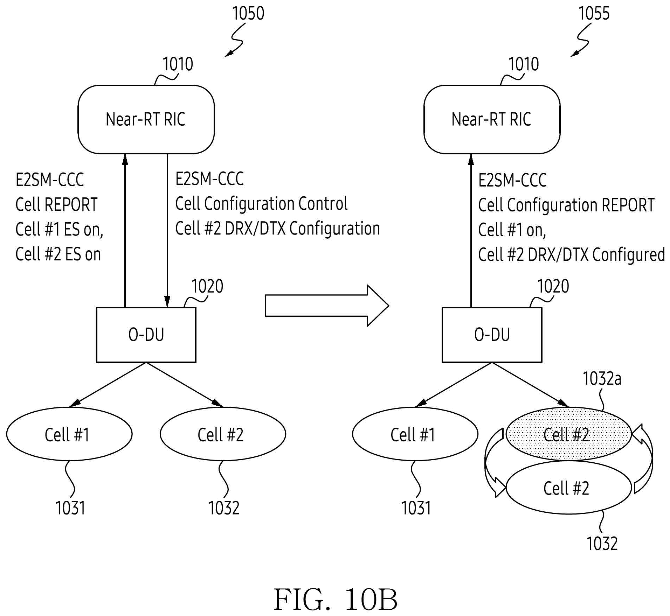

Referring to FIG. 10A, the Near-RT RIC 1010 may control a configuration (or a state) of a cell associated with the O-DU 1020, by providing control information to the O-DU 1020. For example, the Near-RT RIC 1010 may control the O-DU 1020 to turn on/off a switch of a cell controlled by the O-DU 1020, by using the control information. Referring to the above description, the Near-RT RIC 1010 may provide the energy saving through the control information for controlling on/off for the switch of the cell. Unlike controlling on/off for a switch of a cell in examples 1000 and 1005 of FIG. 10A, in FIG. 10B, a method for controlling cell DRX/DTX configured by the O-DU 1020 through cell DRX/DTX configuration information is described.

FIG. 10B illustrates examples of a method for controlling a power reduction mode of a cell associated with an E2 node by the Near-RT RIC.

Referring to FIG. 10B, the Near-RT RIC 1010 illustrates examples 1050 and 1055 for controlling cell DRX/DTX of a cell (or an O-RU) associated with the O-DU 1020, for the energy saving. For example, the power reduction mode may be referred to as a sleep mode (or a sleep state) according to configuration of the cell DRX/DTX. The Near-RT RIC 1010 of FIG. 10B may include at least a portion of the RIC 640 of FIG. 6. The O-DU 1020 of FIG. 10B may be included in the E2 node 610 of FIG. 6. For example, the O-DU 1020 of FIG. 10B may be an example of the E2 node 610. In other words, the O-DU 1020 may be referred to as the E2 node.

Referring to example 1050, the O-DU 1020 may perform reporting on cells 1031 and 1032 associated with the O-DU 1020 to the Near-RT RIC 1010. In example 1050 of FIG. 10B, it is illustrated that two cells 1031 and 1032 are configured for the O-DU 1020, but an embodiment of the present disclosure is not limited thereto. For example, one cell or three or more cells may be configured for the O-DU 1020. For example, the O-DU 1020 may transmit, to the Near-RT RIC 1020, the report indicating that an energy saving function of the first cell 1031 is on and an energy saving function of the second cell 1032 is on. For example, the report may be referred to as an E2SM-CCC cell report or a cell report. For example, the O-DU 1020 may transmit the report through a RIC indication procedure. For example, the O-DU 1020 may transmit the report through a RIC indication message. For example, the energy saving function of the first cell 1031 being on may indicate that a function for the NES may be used in the first cell 1031. In addition, the energy saving function of the second cell 1032 being on may indicate that a function for the NES may be used in the second cell 1032. In addition, for example, the report may indicate that a switch of the first cell 1031 is on and a switch of the second cell 1032 is on.

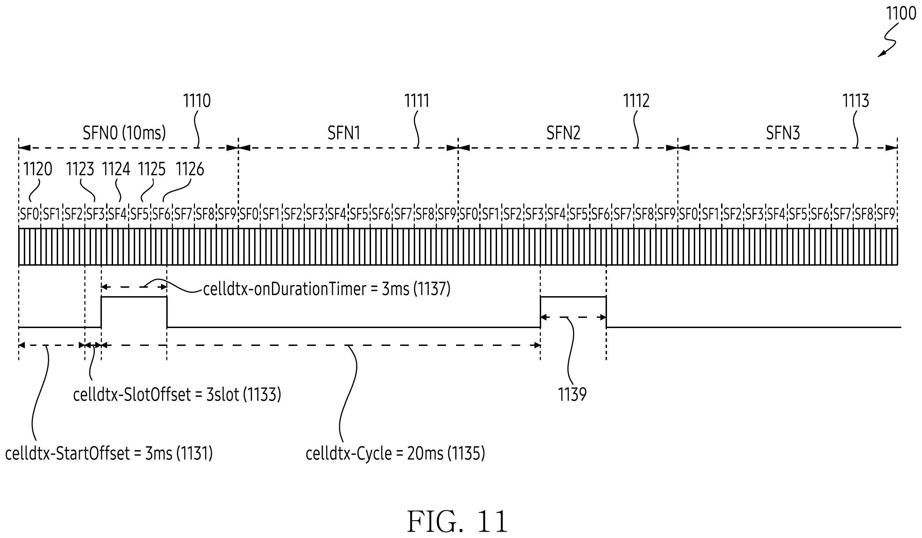

Referring to example 1050, the Near-RT RIC 1010 may transmit control information to the O-DU 1020. For example, the Near-RT RIC 1010 may transmit the control information to the O-DU 1020, in response to recognizing that cells 1031 and 1032 of the O-DU 1020 support the energy saving function, based on the received report. For example, the control information may be referred to as E2SM-CCC cell configuration control or cell configuration control. For example,

the Near-RT RIC 1010 may transmit the control information through a RIC control procedure. For example, the Near-RT RIC 1010 may transmit the control information through a RIC control message. For example, the control information may include cell DRX/DTX configuration information of the second cell 1032. For example, the cell DRX/DTX configuration information may include at least one of DRX configuration information of a cell or DTX configuration information of a cell. Specific description related thereto is described in FIG. 11 below.

Referring to the above description, the example 1050 in which the report is provided through the RIC indication message and the control information is provided through the RIC control message is described, but an embodiment of the present disclosure is not limited thereto. For example, the report or the control information may be provided through a message of another procedure.

Referring to the example 1055, the O-DU 1020 may change a cell configuration based on the received control information. For example, the O-DU 1020 may configure cell DRX/DTX of the second cell 1032 based on the control information including cell DRX/DTX configuration information of the second cell 1032. As the cell DRX/DTX is configured, the second cell 1032 may be periodically activated (or on, or enabled) and deactivated (or off, or disabled). For example, the O-DU 1020 may periodically change from the activated second cell 1032 to a deactivated second cell 1032a and change from the deactivated second cell 1032a to the activated second cell 1032.

For example, the O-DU 1020 may perform reporting on a changed configuration of the second cell 1032. For example, the O-DU 1020 may transmit, to the Near-RT RIC 1010, the report indicating that the first cell 1031 is on and cell DRX/DTX is configured in the second cell 1032. For example, the report may be referred to as an E2SM-CCC cell configuration report or a cell configuration report. For example, the O-DU 1020 may transmit the report through a RIC indication procedure. For example, the O-DU 1020 may transmit the report through a RIC indication message.

Referring to the above description, the example 1055 in which the report is provided through the RIC indication message is described, but an embodiment of the present disclosure is not limited thereto. For example, the report may be provided through a message of another procedure.

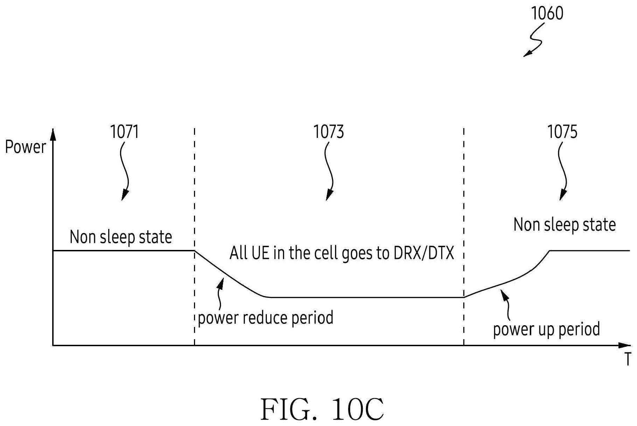

Referring to FIG. 10B, the Near-RT RIC 1010 may control a configuration (or a state) of a cell associated with the O-DU 1020, by providing control information including the cell DRX/DTX configuration information to the O-DU 1020. For example, the Near-RT RIC 1010 may control the O-DU 1020 to configure cell DRX/DTX of a cell controlled by the O-DU 1020 by using the control information. Referring to the above description, the Near-RT RIC 1010 may provide the energy saving through control information including the cell DRX/DTX configuration information. Hereinafter, in FIG. 10C, an example of power consumption of a cell (or an O-RU) based on control information including the cell DRX/DTX configuration information provided from the Near-RT RIC 1010 is described.

FIG. 10C illustrates an example of a graph for power consumption of a network according to a power reduction mode of a cell.

FIG. 10C illustrates an example of a graph 1060 for power consumption of a network according to a power reduction mode (or a sleep mode, a sleep state) of a cell (or an O-RU). In an example of FIG. 10C, the power reduction mode of the cell (or the O-RU) may be operated based on that the O-DU 1020 configures cell DRX/DTX for the cell (or the O-RU) according to control information including the cell DRX/DTX configuration information provided from the Near-RT RIC 1010 in examples 1050 and 1055 of FIG. 10B.

Referring to FIG. 10C, the graph 1060 illustrates a first section 1071 in which the cell (or the O-RU) is in a non-sleep mode (or a non-sleep state) different from the power reduction mode, a second section 1073 in which the cell (or the O-RU) is in the power reduction mode, and a third section 1075 in which the cell (or the O-RU) is in the non-sleep mode. The x-axis of the graph 1060 may indicate time, and the y-axis may indicate power (or energy).

Referring to the graph 1060, in the first section 1071, power of the cell in the non-sleep mode may have a first value. While being changed from the first section 1071 to the second section 1073, the O-DU 1020 may receive, from the Near-RT RIC 1010, the control information including the cell DRX/DTX configuration information for the cell. The O-DU 1020 may change a mode of the cell from the non-sleep mode to the power reduction mode based on the control information. In the second section 1073, as it is changed to the power reduction mode, the power of the cell may be changed from the first value to a second value lower than the first value. For example, in a portion of the second section 1073, power of the cell may be gradually decreased from the first value to the second value over time. The portion of the second section 1073 may be referred to as a power reduction section of the cell (or the O-RU). In a case that the cell is in the power reduction mode, all terminals of the cell may use DRX/DTX. At this time, all terminals of the cell may be NES terminals supporting the cell DRX/DTX.

Referring to the graph 1060, while being changed from the second section 1073 to the third section 1075, the O-DU 1020 may receive, from the Near-RT RIC 1010, the control information including the cell DRX/DTX configuration information for the cell. The O-DU 1020 may change a mode of the cell from the power reduction mode to the non-sleep mode based on the control information. In the third section 1075, as it is changed to the non-sleep mode, the power of the cell may be changed from the second value to the first value. For example, in a portion of the third section 1075, power of the cell may be gradually increased from the second value to the first value over time. The portion of the third section 1075 may be referred to as a power increase section of the cell (or the O-RU). In the graph 1060, an example in which power of the first

section 1071 and power of the third section 1075 are the same as the first value is illustrated, but an embodiment of the present disclosure is not limited thereto.

Referring to FIG. 10B and FIG. 10C, the Near-RT RIC 1010 may cause the O-DU 1020 to control a configuration of a cell by providing cell DRX/DTX configuration information to the O-DU 1020. An apparatus and a method according to embodiments of the present disclosure may provide an energy saving function for reducing power consumption of a network by causing to control a configuration of the cell according to the cell DRX/DTX configuration information.

FIG. 11 illustrates an example of configuration information for a power reduction mode of a cell.

FIG. 11 illustrates an example 1100 of a time resource for describing cell DRX configuration information for a power reduction mode of the cell. For example, the time resource may include four frames (or radio frames) 1110, 1111, 1112, and 1113. This is merely an example for convenience of description, and an embodiment of the present disclosure is not limited thereto.

Referring to the example 1100, each of the frames 1110, 1111, 1112, and 1113 of the time resource may have a system frame number (SFN). For example, an SFN of the frame 1110 may be SFN0. An SFN of the frame 1111 may be SFN1. An SFN of the frame 1112 may be SFN2. An SFN of the frame 1113 may be SFN3. Each of the frames 1110, 1111, 1112, and 1113 may have a length of 10 ms. For example, each of the frames 1110, 1111, 1112, and 1113 may include ten subframes (SFs). Each subframe may have a length of 1 ms. It is assumed that subcarrier spacing (SCS) is 60 kHz, in the time resource of the example 1100. In other words, one subframe may include four slots.

For example, an example of the cell DRX configuration information may be described with reference to the following table.

[Table 1]

```
CellDRX-Config-r18 ::=                    SEQUENCE {
    celldrx-onDurationTimer-r18               CHOICE {
                                              subMilliSeconds INTEGER (1..31)
,
                                              milliSeconds    ENUMERATED {
                                                  ms1, ms2, ms3, ms4, ms5, ms6,
ms8, ms10, ms20, ms30, ms40, ms50, ms60,
                                                  ms80, ms100, ms200, ms300,
ms400, ms500, ms600, ms800, ms1000, ms1200,
                                                  ms1600, spare8, spare7,
spare6, spare5, spare4, spare3, spare2, spare1 }
                                              }
              OPTIONAL,
    celldrx-CycleStartOffset-r18          CHOICE {
        ms10                                  INTEGER(0..9),
        ms20                                  INTEGER(0..19),
        ms32                                  INTEGER(0..31),
        ms40                                  INTEGER(0..39),
        ms60                                  INTEGER(0..59),
        ms64                                  INTEGER(0..63),
        ms70                                  INTEGER(0..69),
        ms80                                  INTEGER(0..79),
        ms128                                 INTEGER(0..127),
        ms160                                 INTEGER(0..159),
```

```
        ms256                                   INTEGER(0..255),
        ms320                                   INTEGER(0..319),
        ms512                                   INTEGER(0..511),
        ms640                                   INTEGER(0..639),
        ms1024                                  INTEGER(0..1023),
        ms1280                                  INTEGER(0..1279),
        ms2048                                  INTEGER(0..2047),
        ms2560                                  INTEGER(0..2559),
        ms5120                                  INTEGER(0..5119),
        ms10240                                 INTEGER(0..10239)
    }
            OPTIONAL,
                                                              celldrx-SlotOffset-
r18             INTEGER (0..31)                                        OPTIONAL

}
```

Referring to the above table, the celldrx-onDurationTimer-r18 may indicate a length of a section in which a base station (or a terminal) is awake while DRX of a cell is configured (hereinafter, an on-duration timer), the celldrx-CycleStartOffset-r18 may indicate a length of a cycle in which DRX of a cell is configured and an offset for a subframe in which the cycle starts (hereinafter, a start offset), and the celldrx-SlotOffset-r18 may indicate an offset for a slot in which the cycle in which DRX of a cell is configured starts (hereinafter, a slot offset).

In relation to the cell DRX configuration information, the example 1100 of FIG. 11 may be referred. In the time resource of the example 1100, cell DRX may be configured based on a frame 1110 having SFN0. This is merely for convenience of description, and an embodiment of the present disclosure is not limited thereto. For example, the cell DRX may also be configured for a frame having an arbitrary SFN.

In the example 1100 of FIG. 11, for the cell DRX, it is assumed that a start offset 1131 of cell DRX configuration information is set to 3ms, a slot offset 1133 of the cell DRX configuration information is set to 3 slots, a length of a cycle 1135 of the cell DRX configuration information is set to 20ms, and a length of an on-duration timer of the cell DRX configuration information is set to 3ms. For example, the start offset 1131 may indicate an offset in a unit of a subframe from an initial SF0 1120 of the frame 1110 serving as a reference. Based on the start offset 1131 set to 3 ms, an SF3 1123 shifted by 3 ms from the SF0 1120 of the frame 1110 may be indicated. Based on the slot offset 1133 set to 3 slots, a third slot among slots in the SF3 1123 may be indicated. That is, the cell DRX may start from the third slot of the SF3 1123. At this time, the cell DRX may be periodically repeated, and a section in which the cell DRX is periodically repeated may be referred to as a cycle 1135. In example 1100, the cycle 1135 may have a length of 20 ms. While the cell DRX is repeated, in a partial section 1137 of the

cycle 1135, a base station (or an O-RU) and a terminal may be awake. The base station (or the O-RU) and the terminal being awake in the section 1137 of the cell DRX may be understood as performing reception. For example, the section 1137 in which the reception is performed may be referred to as a section in which the on-duration timer is activated. For example, the reception may be performed for 3 ms from a timing at which the cell DRX starts (e.g., the third slot of the SF3 1123). For example, the reception may be performed in a portion (e.g., a fourth slot) of the SF3 1123, the SF4 1124, the SF5 1125, and a portion of the SF6 1126 (e.g., first to third slots). After the cycle 1135 has passed from the timing, the on-duration timer may be activated in a partial section 1139 of the frame 1112 having SFN2.

In the example 1100, an example of cell DRX configuration information for cell DRX is illustrated, but an embodiment of the present disclosure is not limited thereto. For example, an example of cell DTX configuration information for cell DTX may be described with reference to the following table.

[Table 2]

```
CellDTX-Config-r18 ::=                    SEQUENCE {
    celldtx-onDurationTimer-r18              CHOICE {
                                             subMilliSeconds INTEGER (1..31)
,
                                             milliSeconds    ENUMERATED {
                                                 ms1, ms2, ms3, ms4, ms5, ms6,
ms8, ms10, ms20, ms30, ms40, ms50, ms60,
```

```
                                                 ms80, ms100, ms200, ms300,
ms400, ms500, ms600, ms800, ms1000, ms1200,
                                                 ms1600, spare8, spare7,
spare6, spare5, spare4, spare3, spare2, spare1 }
                                              }
              OPTIONAL,
    celldtx-CycleStartOffset-r18        CHOICE {
        ms10                                INTEGER(0..9),
        ms20                                INTEGER(0..19),
        ms32                                INTEGER(0..31),
        ms40                                INTEGER(0..39),
        ms60                                INTEGER(0..59),
        ms64                                INTEGER(0..63),
        ms70                                INTEGER(0..69),
        ms80                                INTEGER(0..79),
        ms128                               INTEGER(0..127),
        ms160                               INTEGER(0..159),
        ms256                               INTEGER(0..255),
        ms320                               INTEGER(0..319),
        ms512                               INTEGER(0..511),
        ms640                               INTEGER(0..639),
        ms1024                              INTEGER(0..1023),
        ms1280                              INTEGER(0..1279),
        ms2048                              INTEGER(0..2047),
        ms2560                              INTEGER(0..2559),
        ms5120                              INTEGER(0..5119),
        ms10240                             INTEGER(0..10239)
     }
              OPTIONAL,
                                                       celldtx-SlotOffset-
r18             INTEGER (0..31)                                   OPTIONAL,
```

```
                                                              jointCellDTXDRXconfig-
r18            ENUMERATED {true}                                      OPTIONAL

}
```

Referring to the above table, the celldtx-onDurationTimer-r18 may indicate a length (or an on-duration timer) of a section in which a base station (or a terminal) is awake while DTX of a cell is configured, the celldtx-CycleStartOffset-r18 may indicate a length of a cycle in which DTX of a cell is configured and an offset for a subframe in which the cycle starts (or a start offset), and the celldtx-SlotOffset-r18 may indicate an offset for a slot in which the cycle in which DTX of a cell is configured starts (or a slot offset).

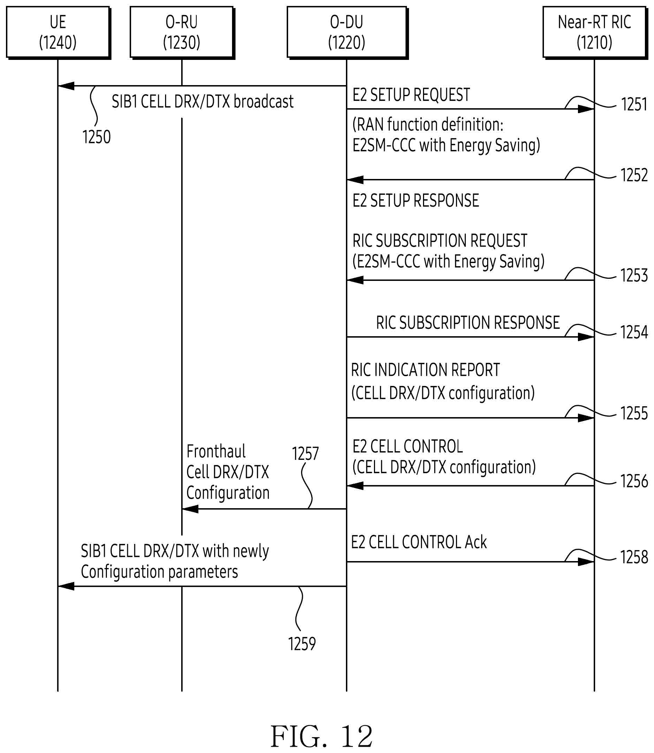

The cell DRX configuration information and the cell DTX configuration information exemplified in FIG. 11 may be included in system information broadcasted by a base station (e.g., the base station 110 of FIG. 1) to a terminal (e.g., the terminal 120 of FIG. 1). The E2 node (e.g., the O-DU 1020 of FIG. 10B) including the base station may obtain optimal cell DRX configuration information or cell DTX configuration information from the Near-RT RIC (e.g., the Near-RT RIC 1010 of FIG. 10B). An example of signaling in which the optimal cell DRX configuration information or cell DTX configuration information is provided from the Near-RT RIC to the E2 node is described in FIG. 12.

FIG. 12 illustrates an example of signaling for a method for controlling a power reduction mode of a cell associated with an E2 node by the Near-RT RIC.

A Near-RT RIC 1210 of FIG. 12 may include at least a portion of the RIC 640 of FIG. 6. An O-DU 1220 of FIG. 12 may be included in the E2 node 610 of FIG. 6. For example, the O-DU 1220 of FIG. 12 may be an example of the E2 node 610. The O-DU 1220 of FIG. 12 may indicate an O-DU supporting NES. An O-RU 1230 of FIG. 12 may be connected to the O-DU 1220. For example, the O-RU 1230 may be associated with one cell. A UE 1240 of FIG. 12 may be provided with a service through the O-RU 1230 (or a cell). For example, the UE 1240 of FIG. 12 may indicate a UE supporting NES.

Referring to FIG. 12, according to an embodiment, in operation 1250, the O-DU 1220 may broadcast SIB1 to the UE 1240. For example, the O-DU 1220 may broadcast the SIB1 to the UE 1240 through the O-RU 1230. For example, the SIB1 may include cell DRX/DTX configuration information. Detailed description on the cell DRX/DTX configuration information may be described with reference to example 1100 of FIG. 11.

According to an embodiment, in operation 1251 and operation 1252, the O-DU 1220 and the Near-RT RIC 1210 may perform an E2 setup procedure. For example, in operation 1251, the O-DU 1220 may transmit an E2 setup request message to the Near-RT RIC 1210. For example, a RAN function may be defined by the E2 setup request message. For example, the RAN function may include E2SM-CCC for energy saving. For example, in operation 1252, the Near-RT RIC 1210 may transmit an E2 setup response message to the O-DU 1220. For example, the Near-RT RIC 1210 may transmit the E2 setup response message to the O-DU 1220, in response to the E2 setup request message.

In the example of FIG. 12, operation 1250 is illustrated as being performed before operation 1251, but an embodiment of the present disclosure is not limited thereto. For example, operation 1250 may also be performed after operation 1251, or may be repeatedly performed.

According to an embodiment, in operation 1253 and operation 1254, the O-DU 1220 and the Near-RT RIC 1210 may perform a RIC subscription procedure. For example, in operation 1253, the Near-RT RIC 1210 may transmit a RIC subscription request message to the O-DU 1220. For example, the RIC subscription request message may be related to a RAN function. For example, the RAN function may include E2SM-CCC for energy saving. For example, in operation 1254, the O-DU 1220 may transmit a RIC subscription response message to the Near-RT RIC 1210. For example, the O-DU 1220 may transmit the RIC subscription response message to the Near-RT RIC 1210, in response to the RIC subscription request message.

According to an embodiment, in operation 1255, the O-DU 1220 may transmit a RIC indication message to the Near-RT RIC 1210. For example, the RIC indication message may include reporting information. For example, the reporting information may include cell DRX/DTX configuration information configured in the O-DU 1220. In other words, the reporting information may include cell DRX/DTX configuration information broadcasted by the O-DU 1220 in operation 1250. The cell DRX/DTX configuration information included in the reporting information may be referred to as old cell

DRX/DTX configuration information. In addition, for example, the reporting information may include parameters for energy saving. For example, the parameters for the energy saving may include at least one of esSwitch (or, energy saving switching information) indicating whether the energy saving function is activated or deactivated, energySavingState_carrieroff (or energy saving state information) specifying a state related to the energy saving in a cell, or energySavingControl_carrieroff (or, energy saving control information) for starting activation or deactivation of the energy saving. For example, detailed description on the parameters may be described with reference to Table 9 below.

According to an embodiment, the Near-RT RIC 1210 may calculate optimal cell DRX/DTX configuration information, based on the RIC indication message. For example, the Near-RT RIC 1210 may generate new cell DRX/DTX configuration information by using old cell DRX/DTX configuration information configured in the O-DU 1220 included in the RIC indication message. Alternatively, for example, the Near-RT RIC 1210 may also generate the new cell DRX/DTX configuration information by using capability information of the UE 1240 and the RIC indication message. For example, the capability information of the UE 1240 may include whether the function of the NES is supported.

According to an embodiment, in operation 1255, the Near-RT RIC 1210 may transmit E2 cell control information to the O-DU 1220. For example, the E2 cell control information may include the new cell DRX/DTX configuration information. For example, the E2 cell control information may include at least one of new cell DRX configuration information or new cell DTX configuration information. For example, the Near-RT RIC 1210 may transmit a RIC control message including the E2 cell control information to the O-DU 1220. However, an embodiment of the present disclosure is not limited thereto. For example, the E2 cell control information may also be transmitted through a message different from the RIC control message.

For example, the RIC control message may include a RIC control header information element (IE). For example, the RIC control header IE may include a header format. The header format may include E2SM-CCC Control Header Format1. An example of the RIC control header IE and the header format may be described with reference to the following tables.

[Table 3]

| IE/Group Name | Presence | Range | IE type and reference | Semantics description |
|---|---|---|---|---|
| **CHOICE** *Control Header Format* | | | | |
| >E2SM-CCC Control Header Format 1 | M | | 9.2.1.6.1 | |

[Table 4]

| IE/Group Name | Presence | Range | IE type and reference | Semantics description |
|---|---|---|---|---|
| RIC Style Type | M | | 9.3.3 | Refer to Section 7.6.1 |

The above-described Table 3 indicates an example of the RIC control header IE, and Table 4 may indicate an example of the header format. Referring to the above-described tables, the RIC control header IE may include the header format (E2SM-CCC Control Header Format1), and the header format may include a RIC style type. The RIC style type may indicate a level at which the RIC control message is used. An example of the RIC style type may be described with reference to the following table.

[Table 5]

| RIC Style Type | Style Name | Style Description |
|---|---|---|
| 1 | Node Configuration and Control | Used to perform node-level configuration and control at the E2 Node |
| 2 | Cell Configuration and Control | Used to perform cell-level configuration and control at the E2 Node |

Referring to the above table, the RIC style type may include a first type and a second type. For example, the first type may be used for performing configuration and control of a node level in an E2 node (e.g., the O-DU 1220). The second type may be used for performing configuration and control of a cell level in an E2 node (e.g., an O-DU 1220).

For example, in a case that the RIC style type is the first type, the RIC control message may have a first format. For example, the first format may be referred to as E2SM-CCC Control Message Format 1. An example of the RIC control message having the first format may be described with reference to the following table.

[Table 6]

| IE/Group Name | Presence | Range | IE type and reference | Semantics description |
|---|---|---|---|---|
| List of Configuration Structures | | *1.. <maxnoofConfigurations>* | | Indicates the configuration structures that are controlled within the message. |
| >RAN Configuration Structure Name | M | | 9.3.7 | Indicates the RAN Configuration Structure name. |
| >Old Values of Attributes | M | | OCTET STRING | Provides the old attribute values for the respective RAN Configuration Structure defined in Section 8.6.1. |
| >New Values of Attributes | M | | OCTET STRING | Provides the new attribute values for the respective RAN Configuration Structure defined in Section 8.6.1. |

Referring to the above table, the RIC control message having the first format may include a list of configuration structures. Each of the configuration structures in the list may include a RAN configuration structure name, old values of attributes, and new values of attributes.

Unlike this, in a case that the RIC style type is the second type, the RIC control message may have a second format. For example, the second format may be referred to as E2SM-CCC Control Message Format 2. An example of the RIC control message having the second format may be described with reference to the following table.

[Table 7]

| IE/Group Name | Presence | Range | IE type and reference | Semantics description |
|---|---|---|---|---|
| List of Cells | | *1.. <maxnoofCells>* | | |
| >Cell Global Id | M | | 9.3.6 | Indicates the target cell for control. |
| >List of Configuration Structures | | *1.. <maxnoofConfigurations>* | | |
| >>RAN Configuration Structure Name | M | | 9.3.7 | Indicates the RAN Configuration Structure name. |
| >>Old Values of Attributes | M | | OCTET STRING | Provides the old attribute values for the respective RAN Configuration Structure defined in Section 8.6.2. |
| >>New Values of Attributes | M | | OCTET STRING | Provides the new attribute values for the respective RAN Configuration Structure defined in Section 8.6.2. |

Referring to the above table, the RIC control message having the second format may include a list of cells. Each of the cells in the list may include a Cell Global Id and a list of configuration structures. Each of the configuration structures in the list may include a RAN configuration structure name, old values of attributes, and new values of attributes.

When compared with the RIC control message having the first format, the RIC control message having the second format may further include information on a cell (e.g., the Cell Global Id), and configuration structures may be defined in relation to the information on the cell. According to an embodiment, the new cell DRX/DTX configuration information may be provided through the RIC control message having the second format. Since the new cell DRX/DTX configuration information provided by the Near-RT RIC 1210 to the O-DU 1220 may be configured for a cell (or the O-RU 1230) associated with the O-DU 1220, the new cell DRX/DTX configuration information may be included in the RIC control message having the second format. For example, the new cell DRX/DTX configuration information may be included in the RAN configuration structure name of the RIC control message having the second format. An example of the RAN

configuration structure name of the RIC control message having the second format may be described with reference to the following table.

[Table 8]

| RAN Configuration Structure Name | RAN Configuration Structure Definition | Semantics Description |
|---|---|---|
| O-NRCellCU | 8.8.2.1 | Represents O-NRCellCU attributes defined in 8.8.2.1. |
| O-NRCellDU | 8.8.2.2 | Represents O-NRCellDU attributes defined in 8.8.2.2. |
| O-BWP | 8.8.2.3 | Represents O-BWP attributes defined in 8.8.2.3. |
| O-RRMPolicyRatio | 8.8.2.4 | Represents O-RRMPolicyRatio attributes defined in 8.8.2.4. |
| **O-EnergySaving** | **8.8.2.x** | **Represents O-EnergySaving attributes defined in 8.8.2.x** |

Referring to the above table, the cell level RAN configuration structure name may include O-NRCellCU indicating O-NRCellCU attributes, O-NRCellDU indicating O-NRCellDU attributes, O-BWP indicating O-BWP attributes, O-RRMPolicyRatio indicating O-RRMPolicyRatio attributes, and O-EnergySaving indicating O-EnergySaving attributes.

According to an embodiment, the new cell DRX/DTX configuration information may be included in the O-EnergySaving of the RIC control message having the second format. An example of the O-EnergySaving may be described with reference to the following table.

[Table 9]

| IE/Group Name | Supported Services | Is writable | IE type and reference | Semantics descriptio n |
|---|---|---|---|---|
| esSwitch | REPORT | FALSE | ENUMERATED (TRUE, FALSE) | This attribute determines whether the energy-saving function is enabled or disabled. |
| energySavingState_carrieroff | REPORT | TRUE | ENUMERATED (None, isNotEnergySaving, isE nergySaving) | Specifies the status regarding the energy-saving in the cell. |
| energySavingControl_carrieroff | REPORT, CONTORL | TRUE | ENUMERATED (None, toBeEnergySaving, toB eNotEnergySaving) | This attribute allows the Near-RT RIC to initiate energy-saving activation or deactivation. |
| CHOICE celldrx-onDurationTimer | REPORT, CONTORL | TRUE | | |
| >subMilliSeconds | | | INTEGER(1..31) | |
| >milliSeconds | | | ENUMERATED (ms1, ms2, ms3, ms4, ms5, ms6, ms8, ms10, ms20, ms30, ms40, ms50, ms60, ms80, ms100, ms200, ms300, ms400, ms500, ms600, ms800, ms1000, ms1200, ms1600, spare8, spare7, spare6, spare5, spare4, spare3, spare2, spare1) | |

(continued)

| IE/Group Name | Supported Services | Is writable | IE type and reference | Semantics descriptio n |
|---|---|---|---|---|
| CHOICE celldrx-CycleStartOff-set | REPORT, CONTORL | TRUE | | |
| >ms10 | | | INTEGER(0..9) | |
| >ms20 | | | INTEGER(0..19) | |
| >ms32 | | | INTEGER(0..31) | |
| >ms40 | | | INTEGER(0..39) | |
| >ms60 | | | INTEGER(0..59) | |
| >ms64 | | | INTEGER(0..63) | |
| >ms70 | | | INTEGER(0..69) | |
| >ms80 | | | INTEGER(0..79) | |
| >ms128 | | | INTEGER(0..127) | |
| >ms160 | | | INTEGER(0..159) | |
| >ms256 | | | INTEGER(0..255) | |
| >ms320 | | | INTEGER(0..319) | |
| >ms512 | | | INTEGER(0..511) | |
| >ms640 | | | INTEGER(0..639) | |
| >ms1024 | | | INTEGER(0..1023) | |
| >ms1280 | | | INTEGER(0..1279) | |
| >ms2048 | | | INTEGER(0..2047) | |
| >ms2560 | | | INTEGER(0..2559) | |
| >ms5120 | | | INTEGER(0..5119) | |
| >ms10240 | | | INTEGER(0..10239) | |
| celldrx-SlotOffset | REPORT, CONTORL | TRUE | INTEGER(0..31) | |
| CHOICE celldtx-onDurationTi-mer | REPORT, CONTORL | TRUE | | |
| >subMilliSeconds | | | INTEGER(1..31) | |
| >milliSeconds | | | ENUMERATED (ms1, ms2, ms3, ms4, ms5, ms6, ms8, ms10, ms20, ms30, ms40, ms50, ms60, ms80, ms100, ms200, ms300, ms400, ms500, ms600, ms800, ms1000, ms1200, ms1600, spare8, spare7, spare6, spare5, spare4, spare3, spare2, spare1) | |
| CHOICE celldtx-CycleStartOff-set | REPORT, CONTORL | TRUE | | |
| >ms10 | | | INTEGER(0..9) | |
| >ms20 | | | INTEGER(0..19) | |
| >ms32 | | | INTEGER(0..31) | |
| >ms40 | | | INTEGER(0..39) | |
| >ms60 | | | INTEGER(0..59) | |

(continued)

| IE/Group Name | Supported Services | Is writable | IE type and reference | Semantics descriptio n |
|---|---|---|---|---|
| >ms64 | | | INTEGER(0..63) | |
| >ms70 | | | INTEGER(0..69) | |
| >ms80 | | | INTEGER(0..79) | |
| >ms128 | | | INTEGER(0..127) | |
| >ms160 | | | INTEGER(0..159) | |
| >ms256 | | | INTEGER(0..255) | |
| >ms320 | | | INTEGER(0..319) | |
| >ms512 | | | INTEGER(0..511) | |
| >ms640 | | | INTEGER(0..639) | |
| >ms1024 | | | INTEGER(0..1023) | |
| >ms1280 | | | INTEGER(0..1279) | |
| >ms2048 | | | INTEGER(0..2047) | |
| >ms2560 | | | INTEGER(0..2559) | |
| >ms5120 | | | INTEGER(0..5119) | |
| >ms10240 | | | INTEGER(0..10239) | |
| celldtx-SlotOffset | REPORT, CONTORL | TRUE | INTEGER(0..31) | |

Referring to the above table, the O-EnergySaving may include parameters (or IEs). For example, parameters for a REPORT service of the O-EnergySaving may be included in the RIC indication message. For example, parameters for a CONTROL service of the O-EnergySaving may be included in the RIC control message.

For example, the parameters may include esSwitch (or energy saving switching information) indicating whether the energy saving function is activated or deactivated. For example, the esSwitch having a value of TRUE may indicate that the energy saving function of an E2 node (e.g., the O-DU 1220) providing the O-EnergySaving is activated. Unlike this, the esSwitch having a value of FALSE may indicate that the energy saving function of the E2 node (e.g., the O-DU 1220) providing the O-EnergySaving is deactivated.

For example, the parameters may include energySavingState_carrieroff (or energy saving state information) specifying a state related to the energy saving in a cell. For example, the energySavingState_carrieroff having a value of isNotEnergySaving may indicate that a cell (e.g., the O-RU 1230) associated with the E2 node is in a state not related to the energy saving. For example, the energySavingState_carrieroff having a value of isEnergySaving may indicate that a cell (e.g., the O-RU 1230) associated with the E2 node is in a state related to the energy saving. Alternatively, for example, the energySavingState_carrieroff may also indicate a value of None.

For example, the parameters may include energySavingControl_carrieroff (or energy saving control information) for starting activation or deactivation of the energy saving. For example, the energySavingControl_carrieroff having a value of toBeEnergySaving may indicate a start for activation of the energy saving. For example, the energySavingControl_carrieroff having a value of toBeNotEnergySaving may indicate a start for deactivation of the energy saving. Alternatively, for example, the energySavingControl_carrieroff may also indicate a value of None.

For example, the parameters may include cell DRX configuration information. The cell DRX configuration information may indicate the new cell DRX configuration information. For example, the cell DRX configuration information included in the parameters may include an on-duration timer for cell DRX, a length of a cycle and a start offset, and a slot offset. The content regarding the cell DRX configuration information of Table 1 may be substantially identically applied to the cell DRX configuration information included in the parameters.

For example, the parameters may include cell DTX configuration information. The cell DTX configuration information may indicate the new cell DTX configuration information. For example, the cell DTX configuration information included in the parameters may include an on-duration timer for cell DTX, a length of a cycle and a start offset, and a slot offset. The content regarding the cell DTX configuration information of Table 2 may be substantially identically applied to the cell DTX configuration information included in the parameters.

Referring to the above table, an example in which the parameters of the O-EnergySaving include both the cell DRX configuration information and the cell DTX configuration information is described, but an embodiment of the present disclosure is not limited thereto. For example, the parameters of the O-EnergySaving may include the cell DRX configuration information, may include the cell DTX configuration information, or may include both the cell DRX configuration information and the cell DTX configuration information.

According to an embodiment, the RIC control message may include the new cell DRX/DTX configuration information. For example, in a case that the RIC control message has the second format, the RIC control message may include at least one of the new cell DRX configuration information or the new cell DTX configuration information. In addition, the RIC control message may further include energySavingControl_carrieroff (or energy saving control information) for starting activation or deactivation of the energy saving.

According to an embodiment, in operation 1257, the O-DU 1220 may transmit the new cell DRX/DTX configuration information to the O-RU 1230. For example, the O-DU 1220 may transmit the new cell DRX/DTX configuration information to the O-RU 1230 through a fronthaul interface. For example, the new cell DRX/DTX configuration information may be included in a control plane message (e.g., a section type or an extension type), a management plane message, or a user plane message transmitted through the fronthaul interface.

According to an embodiment, in operation 1258, the O-DU 1220 may transmit E2 cell control acknowledge information to the Near-RT RIC 1210. For example, the O-DU 1220 may transmit a RIC control acknowledge message, in response to the RIC control message. The RIC control acknowledge message may include the E2 cell control acknowledge information. For example, the RIC control acknowledge message may indicate that cell DRX/DTX is configured based on the new cell DRX/DTX configuration information of the RIC control message.

According to an embodiment, in operation 1259, the O-DU 1220 may broadcast SIB1 to the UE 1240. For example, the O-DU 1220 may broadcast the SIB1 to the UE 1240 through the O-RU 1230. For example, the SIB1 may include the new cell DRX/DTX configuration information. The SIB1 broadcasted in operation 1259 may include the new cell DRX/DTX configuration information, unlike the old cell DRX/DTX configuration information included in the SIB1 broadcasted in operation 1250.

In an example of FIG. 12, operation 1257, operation 1258, and operation 1259 are illustrated as being sequentially performed, but an embodiment of the present disclosure is not limited thereto. For example, operation 1259 may also be performed before operation 1258.

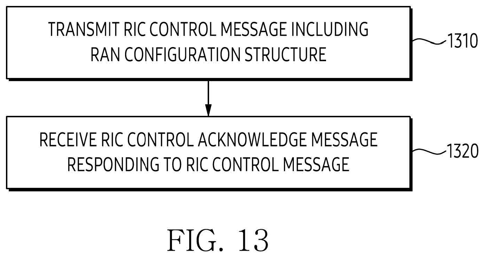

FIG. 13 illustrates an example of an operation flow for a method for controlling a power reduction mode of a cell associated with an E2 node by the Near-RT RIC.

The Near-RT RIC of FIG. 13 may include at least a portion of the RIC 640 of FIG. 6. For example, the Near-RT RIC may be the Near-RT RIC 1210 of FIG. 10B or the Near-RT RIC 1210 of FIG. 12. The E2 node may include at least a portion of the E2 node 610. For example, the E2 node may be the O-DU 1020 of FIG. 10B or the O-DU 1220 of FIG. 12. At least a portion of the method of FIG. 13 may be performed by the Near-RT RIC. For example, at least a portion of the method may be controlled by a processor (e.g., the processor 530 of FIG. 5) of the Near-RT RIC. In the following embodiment, each operation may be sequentially performed, but is not necessarily sequentially performed. For example, an order of the operations may be changed, or at least two operations may be performed in parallel.

In operation 1310, the Near-RT RIC may transmit a RIC control message including a RAN configuration structure. For example, the Near-RT RIC may transmit the RIC control message including the RAN configuration structure to the E2 node.

Although not illustrated in FIG. 13, according to an embodiment, the Near-RT RIC may perform an E2 setup procedure with the E2 node. For example, the Near-RT RIC may receive an E2 setup request message from the E2 node. For example, a RAN function may be defined by the E2 setup request message. For example, the RAN function may include the E2SM-CCC for the energy saving. For example, the Near-RT RIC may transmit an E2 setup response message to the E2 node.

Although not illustrated in FIG. 13, according to an embodiment, the Near-RT RIC may perform a RIC subscription procedure with the E2 node. For example, the Near-RT RIC may transmit a RIC subscription request message to the E2 node. For example, the RIC subscription request message may be related to a RAN function. For example, the RAN function may include the E2SM-CCC for the energy saving. For example, the Near-RT RIC may receive a RIC subscription response message from the E2 node.

Although not illustrated in FIG. 13, according to an embodiment, the Near-RT RIC may receive a RIC indication message from the E2 node. For example, the RIC indication message may include reporting information. For example, the reporting information may include cell DRX/DTX configuration information configured in the E2 node. The cell DRX/DTX configuration information included in the reporting information may be referred to as old cell DRX/DTX configuration information. In addition, for example, the reporting information may include parameters for energy saving. For example, the parameters for the energy saving may include at least one of esSwitch (or energy saving switching information) indicating whether the energy saving function is activated or deactivated, energySavingState_carrieroff (or energy saving state information) specifying a state related to the energy saving in a cell, or energySavingControl_carrieroff (or energy

saving control information) for starting activation or deactivation of the energy saving. For example, detailed description on the parameters may be described with reference to Table 9.

According to an embodiment, the Near-RT RIC may calculate optimal cell DRX/DTX configuration information, based on the RIC indication message. For example, the Near-RT RIC may generate the new cell DRX/DTX configuration information, by using old cell DRX/DTX configuration information configured in the E2 node included in the RIC indication message. Or Alternatively, for example, the Near-RT RIC may also generate the new cell DRX/DTX configuration information, by using capability information of a UE and the RIC indication message. For example, the capability information of the UE may include whether the function of the NES is supported.

According to an embodiment, the RIC control message may include a RIC control header IE. For example, the RIC control header IE may include a header format. The header format may include E2SM-CCC Control Header Format1. An example of the RIC control header IE and the header format may be described with reference to the above-described Table 3 and Table 4.

According to an embodiment, the RIC control message may have a format according to a RIC style type of the header format. For example, in a case that the RIC style type is a first type, the RIC control message may have a first format. For example, in a case that the RIC style type is a second type, the RIC control message may have a second format. For example, the second format may be referred to as E2SM-CCC Control Message Format 2. For example, the second format may be related to configuration and control of a cell level.

According to an embodiment, the RIC control message having the second format may include the RAN configuration structure (or RAN configuration structure name). According to an embodiment, the RAN configuration structure (or the RAN configuration structure name) may include parameters for energy saving. For example, the RAN configuration structure may include O-EnergySaving. Detailed description on the RAN configuration structure may be described with reference to the above-described Table 8.

According to an embodiment, the O-EnergySaving of the RIC control message having the second format may include the new cell DRX/DTX configuration information. For example, the O-EnergySaving may include parameters (or IEs). For example, parameters for a REPORT service of the O-EnergySaving may be included in the RIC indication message. For example, parameters for a CONTROL service of the O-EnergySaving may be included in the RIC control message.

For example, the parameters may include esSwitch (or energy saving switching information) indicating whether the energy saving function is activated or deactivated. For example, the esSwitch having a value of TRUE may indicate that the energy saving function of the E2 node providing the O-EnergySaving is activated. Unlike this, the esSwitch having a value of FALSE may indicate that the energy saving function of the E2 node providing the O-EnergySaving is deactivated.

For example, the parameters may include energySavingState_carrieroff (or energy saving state information) specifying a state related to the energy saving in a cell. For example, the energySavingState_carrieroff having a value of isNotEnergySaving may indicate that a cell (e.g., the O-RU 1230 of FIG. 12) associated with the E2 node is in a state not related to the energy saving. For example, the energySavingState_carrieroff having a value of isEnergySaving may indicate that a cell (e.g., the O-RU 1230 of FIG. 12) associated with the E2 node is in a state related to the energy saving. Alternatively, for example, the energySavingState_carrieroff may also indicate a value of None.

For example, the parameters may include energySavingControl_carrieroff (or energy saving control information) for starting activation or deactivation of the energy saving. For example, the energySavingControl_carrieroff having a value of toBeEnergySaving may indicate a start for activation of the energy saving. For example, the energySavingControl_carrieroff having a value of toBeNotEnergySaving may indicate a start for deactivation of the energy saving. Alternatively, for example, the energySavingControl_carrieroff may also indicate a value of None.

For example, the parameters may include cell DRX configuration information. The cell DRX configuration information may indicate new cell DRX configuration information. For example, the cell DRX configuration information included in the parameters may include an on-duration timer for cell DRX, a length of a cycle and a start offset, and a slot offset. The content regarding the cell DRX configuration information of Table 1 may be substantially identically applied to the cell DRX configuration information included in the parameters.

For example, the parameters may include cell DTX configuration information. The cell DTX configuration information may indicate the new cell DTX configuration information. For example, the cell DTX configuration information included in the parameters may include an on-duration timer for cell DTX, a length of a cycle and a start offset, and a slot offset. The content regarding the cell DTX configuration information of Table 2 may be substantially identically applied to the cell DTX configuration information included in the parameters.

According to an embodiment, in operation 1320, the Near-RT RIC may receive a RIC control acknowledge message responding to the RIC control message. For example, the Near-RT RIC may receive the RIC control acknowledge message from the E2 node. For example, the RIC control acknowledge message may indicate that cell DRX/DTX is configured based on the new cell DRX/DTX configuration information of the RIC control message.

Although not illustrated in FIG. 13, according to an embodiment, the E2 node may transmit the new cell DRX/DTX configuration information to an O-RU. For example, the E2 node may transmit the new cell DRX/DTX configuration

information to the O-RU through a fronthaul interface. For example, the new cell DRX/DTX configuration information may be included in a control plane message (e.g., a section type or an extension type), a management plane message, or a user plane message transmitted through the fronthaul interface.

In addition, although not illustrated in FIG. 13, according to an embodiment, the E2 node may broadcast SIB1 to a UE associated with the O-RU (or cell). For example, the E2 node may broadcast the SIB1 to the UE through the O-RU. For example, the SIB1 may include the new cell DRX/DTX configuration information.

In an apparatus and a method according to embodiments of the present disclosure, the Near-RT RIC may provide cell DRX/DTX configuration information to the E2 node. For example, the Near-RT RIC may calculate (or generate) the cell DRX/DTX configuration information for a network, based on information of the E2 node (e.g., configuration information) and information of terminals in a cell associated with the E2 node (e.g., capability information). Based on the calculated cell DRX/DTX configuration information provided from the Near-RT RIC to the E2 node, the Near-RT RIC may control a power reduction mode (or a sleep mode, a sleep state) of a network (e.g., the E2 node and a terminal connected to the E2 node). Accordingly, the RIC may support an optimal power reduction mode in the network.

As described above, a device for a near-real time radio access network intelligence controller (Near-RT RIC) may comprise a transceiver. The device may comprise at least one processor. The device may comprise memory including instructions. The instructions, when executed by the at least one processor individually or collectively, may cause the device to transmit, to a E2 node, a RIC control message including radio access network (RAN) configuration structure. The instructions, when executed by the at least one processor individually or collectively, may cause the device to receive, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

According to an embodiment, the DRX configuration information may include an on-duration timer of DRX for the cell, a cycle and start offset of DRX for the cell, and a slot offset of DRX for cell. The DTX configuration information may include an on-duration timer of DTX for the cell, a cycle and start offset of DTX for the cell, and a slot offset of DTX for cell.

According to an embodiment, the parameters may include energy saving control information for initiating activation or deactivation of the energy saving. The energy saving control information may be used to indicate activation of energy saving of the E2 node or deactivation of energy saving of the E2 node.

According to an embodiment, the RIC control message may have E2 service model-cell configuration and control (E2SM-CCC) control message format 2. The RIC control message may further include cell global ID of the cell.

According to an embodiment, the E2 node may comprise open-radio access network (O-RAN)-distributed unit (O-DU) supporting network energy saving (NES). The RIC control message may be used to control DRX configuration or DTX configuration in the cell of a O-RAN radio unit (O-RU), which is connected to the O-DU, associated with the cell and at least one user equipment (UE), which is connected to the O-RU, associated with the cell.

According to an embodiment, the instructions, when executed by the at least one processor individually or collectively, may cause the device to perform E2 setup procedure with the E2 node. The instructions, when executed by the at least one processor individually or collectively, may cause the device to perform RIC subscription procedure with the E2 node after performing the E2 setup procedure. The E2 setup procedure and the RIC subscription procedure may be associated with the energy saving.

According to an embodiment, the instructions, when executed by the at least one processor individually or collectively, may cause the device to receive, from the E2 node, a RIC indication message after performing the RIC subscription procedure. The instructions, when executed by the at least one processor individually or collectively, may cause the device to generate the RIC control message based on the RIC indication message. The RIC indication message may include at least one of another DRX configuration information or another DTX configuration information of the cell configured on the E2 node before transmitting the RIC indication message.

As described above, a device for a E2 node may comprise a transceiver. The device may comprise at least one processor. The device may comprise memory including instructions. The instructions, when executed by the at least one processor individually or collectively, may cause the device to receive, from a near-real time radio access network intelligence controller (Near-RT RIC), a RIC control message including radio access network (RAN) configuration structure. The instructions, when executed by the at least one processor individually or collectively, may cause the device to transmit, to the Near-RT RIC, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

According to an embodiment, the DRX configuration information may include an on-duration timer of DRX for the cell, a cycle and start offset of DRX for the cell, and a slot offset of DRX for cell. The DTX configuration information may include an on-duration timer of DTX for the cell, a cycle and start offset of DTX for the cell, and a slot offset of DTX for cell.

According to an embodiment, the parameters may include energy saving control information for initiating

activation or deactivation of the energy saving. The energy saving control information may be used to indicate activation of energy saving of the E2 node or deactivation of energy saving of the E2 node.

According to an embodiment, the RIC control message may have E2 service model-cell configuration and control (E2SM-CCC) control message format 2. The RIC control message may further include cell global ID of the cell.

According to an embodiment, the E2 node may comprise open-radio access network (O-RAN)-distributed unit (O-DU) supporting network energy saving (NES). The RIC control message may be used to control DRX configuration or DTX configuration in the cell of a O-RAN radio unit (O-RU) associated with the cell and at least one user equipment (UE), which is connected to the O-RU, associated with the cell.

According to an embodiment, the instructions, when executed by the at least one processor individually or collectively, may cause the device to perform E2 setup procedure with the Near-RT RIC. The instructions, when executed by the at least one processor individually or collectively, may cause the device to perform RIC subscription procedure with the Near-RT RIC after performing the E2 setup procedure. The E2 setup procedure and the RIC subscription procedure may be associated with the energy saving.

According to an embodiment, the instructions, when executed by the at least one processor individually or collectively, may cause the device to transmit, to the Near-RT RIC, a RIC indication message after performing the RIC subscription procedure. The RIC indication message may include at least one of another DRX configuration information or another DTX configuration information of the cell configured on the E2 node before transmitting the RIC indication message. The RIC control message may be generated based on the RIC indication message.

As described above, a method performed by a device for a near-real time radio access network intelligence controller (Near-RT RIC), the method may comprise transmitting, to a E2 node, a RIC control message including radio access network (RAN) configuration structure. The method may comprise receiving, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

According to an embodiment, the DRX configuration information may include an on-duration timer of DRX for the cell, a cycle and start offset of DRX for the cell, and a slot offset of DRX for cell. The DTX configuration information may include an on-duration timer of DTX for the cell, a cycle and start offset of DTX for the cell, and a slot offset of DTX for cell.

According to an embodiment, the parameters may include energy saving control information for initiating activation or deactivation of the energy saving. The energy saving control information may be used to indicate activation of energy saving of the E2 node or deactivation of energy saving of the E2 node.

According to an embodiment, the RIC control message may have E2 service model-cell configuration and control (E2SM-CCC) control message format 2. The RIC control message may further include cell global ID of the cell.

According to an embodiment, the E2 node may comprise open-radio access network (O-RAN)-distributed unit (O-DU) supporting network energy saving (NES). The RIC control message may be used to control DRX configuration or DTX configuration in the cell of a O-RAN radio unit (O-RU), which is connected to the O-DU, associated with the cell and at least one user equipment (UE), which is connected to the O-RU, associated with the cell.

As described above, a non-transitory computer-readable storage medium, when executed individually or collectively by at least one processor of a device for a near-real time radio access network intelligence controller (Near-RT RIC) comprising a transceiver, may store one or more programs including instructions that cause the device to transmit, to a E2 node, a RIC control message including radio access network (RAN) configuration structure. The non-transitory computer-readable storage medium, when executed individually or collectively by the at least one processor, may store one or more programs including instructions that cause the device to receive, from the E2 node, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

As described above, a method performed by a device for a E2 node may comprise receiving, from a near-real time radio access network intelligence controller (Near-RT RIC), a RIC control message including radio access network (RAN) configuration structure. The method may comprise transmitting, to the Near-RT RIC, a RIC control acknowledge message in response to the RIC control message. The RAN configuration structure may include parameters for energy saving. The parameters may include at least one of discontinuous reception (DRX) configuration information or discontinuous transmission (DTX) configuration information of a cell associated with the E2 node.

As described above, a non-transitory computer-readable storage medium, when executed individually or collectively by at least one processor of a device for a E2 node comprising a transceiver, may store one or more programs including instructions that cause the device to receive, from a near-real time radio access network intelligence controller (Near-RT RIC), a RIC control message including radio access network (RAN) configuration structure. The non-transitory computer-readable storage medium, when executed individually or collectively by the at least one processor, may store one or more programs including instructions that cause the device to transmit, to the Near-RT RIC, a RIC control acknowledge message in response to the RIC control message. The RAN configuration structure may include parameters

for energy saving. The parameters may include at least one of discontinuous reception (DRX) configuration information or discontinuous transmission (DTX) configuration information of a cell associated with the E2 node.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

**1.** A device for a near-real time radio access network intelligence controller (Near-RT RIC) comprising:

a transceiver;
at least one processor; and
memory including instructions,
wherein the instructions, when executed by the at least one processor individually or collectively, cause the device to:

transmit, to a E2 node, a RIC control message including radio access network (RAN) configuration structure; and
receive, from the E2 node, a RIC control acknowledge message in response to the RIC control message,
wherein the RAN configuration structure includes parameters for energy saving, and
wherein the parameters include at least one of discontinuous reception (DRX) configuration information or discontinuous transmission (DTX) configuration information of a cell associated with the E2 node.

**2.** The device of claim 1,

wherein the DRX configuration information includes:

an on-duration timer of DRX for the cell;
a cycle and start offset of DRX for the cell; and
a slot offset of DRX for cell;

wherein the DTX configuration information includes:

an on-duration timer of DTX for the cell;
a cycle and start offset of DTX for the cell; and
a slot offset of DTX for cell.

**3.** The device of claim 2,

wherein the parameters include energy saving control information for initiating activation or deactivation of the energy saving,
wherein the energy saving control information is used to indicate activation of energy saving of the E2 node or deactivation of energy saving of the E2 node.

**4.** The device of claim 1,

wherein the RIC control message has E2 service model-cell configuration and control (E2SM-CCC) control message format 2,
wherein the RIC control message further includes cell global ID of the cell.

**5.** The device of claim 1,

wherein the E2 node comprises open-radio access network (O-RAN)-distributed unit (O-DU) supporting network energy saving (NES), and
wherein the RIC control message is used to control DRX configuration or DTX configuration in the cell of a O-RAN radio unit (O-RU), which is connected to the O-DU, associated with the cell and at least one user equipment (UE), which is connected to the O-RU, associated with the cell.

**6.** The device of claim 1,
wherein the instructions, when executed by the at least one processor individually or collectively, cause the device to:

perform E2 setup procedure with the E2 node; and
perform RIC subscription procedure with the E2 node after performing the E2 setup procedure,
wherein the E2 setup procedure and the RIC subscription procedure are associated with the energy saving.

**7.** The device of claim 6,
wherein the instructions, when executed by the at least one processor individually or collectively, cause the device to:

receive, from the E2 node, a RIC indication message after performing the RIC subscription procedure; and
generate the RIC control message based on the RIC indication message,
wherein the RIC indication message includes at least one of another DRX configuration information or another DTX configuration information of the cell configured on the E2 node before transmitting the RIC indication message.

**8.** A device for a E2 node comprising:

a transceiver;
at least one processor; and
memory including instructions,
wherein the instructions, when executed by the at least one processor individually or collectively, cause the device to:

receive, from a near-real time radio access network intelligence controller (Near-RT RIC), a RIC control message including radio access network (RAN) configuration structure; and
transmit, to the Near-RT RIC, a RIC control acknowledge message in response to the RIC control message,
wherein the RAN configuration structure includes parameters for energy saving, and
wherein the parameters include at least one of discontinuous reception (DRX) configuration information or discontinuous transmission (DTX) configuration information of a cell associated with the E2 node.

**9.** The device of claim 8,

wherein the DRX configuration information includes:

an on-duration timer of DRX for the cell;
a cycle and start offset of DRX for the cell; and
a slot offset of DRX for cell;

wherein the DTX configuration information includes:

an on-duration timer of DTX for the cell;
a cycle and start offset of DTX for the cell; and
a slot offset of DTX for cell.

**10.** The device of claim 9,

wherein the parameters include energy saving control information for initiating activation or deactivation of the energy saving,
wherein the energy saving control information is used to indicate activation of energy saving of the E2 node or deactivation of energy saving of the E2 node.

**11.** The device of claim 8,

wherein the RIC control message has E2 service model-cell configuration and control (E2SM-CCC) control message format 2,
wherein the RIC control message further includes cell global ID of the cell.

**12.** The device of claim 8,

wherein the E2 node comprises open-radio access network (O-RAN)-distributed unit (O-DU) supporting network energy saving (NES), and
wherein the RIC control message is used to control DRX configuration or DTX configuration in the cell of a O-RAN radio unit (O-RU) associated with the cell and at least one user equipment (UE), which is connected to the O-RU, associated with the cell.

**13.** The device of claim 8,
wherein the instructions, when executed by the at least one processor individually or collectively, cause the device to:

perform E2 setup procedure with the Near-RT RIC; and
perform RIC subscription procedure with the Near-RT RIC after performing the E2 setup procedure,
wherein the E2 setup procedure and the RIC subscription procedure are associated with the energy saving.

**14.** A method performed by a device for a near-real time radio access network intelligence controller (Near-RT RIC), the method comprising:

transmitting, to a E2 node, a RIC control message including radio access network (RAN) configuration structure; and
receiving, from the E2 node, a RIC control acknowledge message in response to the RIC control message,
wherein the RAN configuration structure includes parameters for energy saving, and
wherein the parameters include at least one of discontinuous reception (DRX) configuration information or discontinuous transmission (DTX) configuration information of a cell associated with the E2 node.

15. A non-transitory computer-readable storage medium, when executed individually or collectively by at least one processor of a device for a near-real time radio access network intelligence controller (Near-RT RIC) comprising a transceiver, stores one or more programs including instructions that cause the device to:

transmit, to a E2 node, a RIC control message including radio access network (RAN) configuration structure; and
receive, from the E2 node, a RIC control acknowledge message in response to the RIC control message,
wherein the RAN configuration structure includes parameters for energy saving, and
wherein the parameters include at least one of discontinuous reception (DRX) configuration information or discontinuous transmission (DTX) configuration information of a cell associated with the E2 node.

UTRAN
SGSN
GERAN
160
HSS
S3
170
S6a
MME
PCRF
150
S10
S12
S11
S4
Gx
Rx
S1-
MME
LTE-Uu
S5
SGi
TERMINAL
BASE
STATION
S-GW
P-GW
Operator's
IP Services
[e.g.IMS,PSS ect.]
S1-U
120
110
130
140

FIG. 1

250
EPC
210b
EPC
210a
NR
220
TERMINAL

FIG. 2A

EPC
S1-C
S1-U
S1-U
Near-Real Time RIC
E2AP-cp
E2AP-up
eNB
X2-C
O-CU-CP
E1
O-CU-UP
E2AP-du
F1-C
O-DU
F1-U
X2-U
Non-Stand Alone (NSA)
5GC
N2
N3
Near-Real Time RIC
E2AP-cp
E2AP-up
O-CU-CP
E1
O-CU-UP
E2AP-du
F1-C
O-DU
F1-U
Stand Alone (SA)

FIG. 2B

CONTROL PLANE
Radio
Network
Layer
E2AP
350
SCTP
340
Transport
Network
Layer
IP
330
DATA LINK LAYER
320
PHYSICAL LAYER
310

FIG. 3

RIC
E2-CP
E2-UP
E2-DU
O-CU-CP
420
O-CU-UP
410
F1
F1
O-DU
430

FIG. 4

510
520
530
TRANSCEIVER
MEMORY
PROCESSOR

FIG. 5

S1/NGAP
610
E2 Node
614
612
RRC
RRM
E2 NODE
FUNCTION
E1/F1
X2/XN
ANOTHER E2 NODE FUNCTION
616
E2 MESSAGE
640
RIC
xAPP
646
642
644
E2
Termination
DB

FIG. 6

ONAP/MANO/NMS
A1: policy
Near-RT RIC
E2: commands
CU-stack
700
ONAP/MANO/NMS
A1: policy
Near-RT RIC
(selective RRM)
Potential Conflicts
E2: commands
Legacy RRM
CU-stack
750

FIG. 7

810
RIC
E2
E2
830
820
Open
fronthaul
UPF, MEC
O_CU
F1
O_DU
GW
(Opt)
O_RU
(/RU)
Cloud Platform
840
800

FIG. 8

RIC (920)
CAC
Traffic steering
Higher level Data Center
RIC (920)
CAC
Session
Mobility
Traffic Steering
UE context
...
Cell context
The same cloud (Share almost everything)
CU (910)
Session
Mobility
UE context
...
Cell context
I/F
Medium level Data Center
CU (910)
...
I/F
900
Deployment Scenario 1)
RIC is located in separated site
or exist as different NE
only substitute or recommend
for few intelligence required
functions
950
Deployment Scenario 2)
RIC is substituting
almost all functions
in CU except 3GPP I/F
management

FIG. 9

1000
1010
Near-RT RIC
E2SM-CCC
Cell REPORT
Cell #1 ES on,
Cell #2 ES on
E2SM-CCC
Cell Configuration Control
1020
O-DU
Cell #1
Cell #2
1031
1032
1005
1010
Near-RT RIC
E2SM-CCC
Cell Configuration REPORT
Cell #1 on, Cell #2 off
1020
O-DU
Cell #1
Cell #2
1031
1032

FIG. 10A

1050
1010
Near-RT RIC
E2SM-CCC
Cell REPORT
Cell #1 ES on,
Cell #2 ES on
E2SM-CCC
Cell Configuration Control
Cell #2 DRX/DTX Configuration
1020
O-DU
Cell #1
Cell #2
1031
1032
1055
1010
Near-RT RIC
E2SM-CCC
Cell Configuration REPORT
Cell #1 on,
Cell #2 DRX/DTX Configured
1020
O-DU
1032a
Cell #1
Cell #2
Cell #2
1031
1032

FIG. 10B

1060
1071
1073
1075
Power
Non sleep state
All UE in the cell goes to DRX/DTX
Non sleep state
power reduce period
power up period
T

FIG. 10C

1100
SFN0 (10ms)
SFN1
SFN2
SFN3
1110
1111
1112
1113
1120
1123
1124
1125
1126
SF0
SF1
SF2
SF3
SF4
SF5
SF6
SF7
SF8
SF9
celldtx-onDurationTimer = 3ms (1137)
celldtx-SlotOffset = 3slot (1133)
celldtx-StartOffset = 3ms (1131)
celldtx-Cycle = 20ms (1135)
1139

FIG. 11

UE
(1240)
O-RU
(1230)
O-DU
(1220)
Near-RT RIC
(1210)
SIB1 CELL DRX/DTX broadcast
1250
E2 SETUP REQUEST
(RAN function definition:
E2SM-CCC with Energy Saving)
1251
1252
E2 SETUP RESPONSE
RIC SUBSCRIPTION REQUEST
(E2SM-CCC with Energy Saving)
1253
RIC SUBSCRIPTION RESPONSE
1254
RIC INDICATION REPORT
(CELL DRX/DTX configuration)
1255
Fronthaul
Cell DRX/DTX
Configuration
1257
E2 CELL CONTROL
(CELL DRX/DTX configuration)
1256
SIB1 CELL DRX/DTX with newly
Configuration parameters
E2 CELL CONTROL Ack
1258
1259

FIG. 12

TRANSMIT RIC CONTROL MESSAGE INCLUDING RAN CONFIGURATION STRUCTURE
1310
RECEIVE RIC CONTROL ACKNOWLEDGE MESSAGE RESPONDING TO RIC CONTROL MESSAGE
1320

FIG. 13

## INTERNATIONAL SEARCH REPORT

International application No.
**PCT/KR2024/012132**

**A. CLASSIFICATION OF SUBJECT MATTER**

**H04W 52/02**(2009.01)i; **H04W 76/28**(2018.01)i; **H04W 72/0446**(2023.01)i; **H04W 72/29**(2023.01)i; **H04W 88/08**(2009.01)i

According to International Patent Classification (IPC) or to both national classification and IPC

**B. FIELDS SEARCHED**

Minimum documentation searched (classification system followed by classification symbols)

H04W 52/02(2009.01); H04W 60/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: Near-RT RIC, 설정 구조(configuration structure), 제어(control), 확인(acknowledge), E2, 에너지 세이빙(energy saving), DRX, DTX

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0143533 A (SAMSUNG ELECTRONICS CO., LTD.) 25 October 2022 (2022-10-25)<br>See paragraphs [0001], [0010] and [0089]-[0125] and figure 11b. | 1-15 |
| A | BORG, Fredrik. Increasing energy efficiency of O-RAN through utilization of xApps. Computer Science and Engineering, master`s level, LULEA TEKNISKA UNIVERSITET. 15 June 2023. [Retrieved on 11 October 2024]. Retrieved from <https://www.diva-portal.org/smash/get/diva2:1765998/FULLTEXT01.pdf>.<br>See page 7. | 1-15 |
| A | 정수정 등. 모바일 네트워크 에너지 절감 기술 동향. 전자통신동향분석. vol. 38, no. 2, 01 April 2023 (JEONG, Su-Jung et al. Trends in Mobile Network Energy-Saving Technology. Electronics and Telecommunications Trends). [Retrieved on 11 October 2024]. Retrieved from <https://ettrends.etri.re.kr/ettrends/201/0905201003/>.<br>See page 31, right column, line 1 - page 34, left column, line 22. | 1-15 |
| A | WO 2023-157364 A1 (RAKUTEN MOBILE, INC.) 24 August 2023 (2023-08-24)<br>See paragraphs [0015], [0022], [0047] and [0055] and figure 1. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 November 2024** | **12 November 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/012132**

**C. DOCUMENTS CONSIDERED TO BE RELEVANT**

| Category* | Citation of document, with indication, where appropriate, of the relevant passages | Relevant to claim No. |
|---|---|---|
| A | CHINA TELECOM. Discussion on the mechanism of Cell DTX/DRX for NES. R1-2307624, 3GPP TSG RAN WG1 #114. Toulouse, France. 11 August 2023. See pages 1-11. | 1-15 |

Form PCT/ISA/210 (second sheet) (July 2022)

**INTERNATIONAL SEARCH REPORT**
**Information on patent family members**

International application No.
**PCT/KR2024/012132**

| Patent document cited in search report | Publication date (day/month/year) | Patent family member(s) | Publication date (day/month/year) |
|---|---|---|---|
| KR 10-2022-0143533 A | 25 October 2022 | CN 117204069 A | 08 December 2023 |
| | | EP 4301055 A1 | 03 January 2024 |
| | | EP 4301055 A4 | 07 August 2024 |
| | | US 2023-0133083 A1 | 04 May 2023 |
| | | WO 2022-220640 A1 | 20 October 2022 |
| WO 2023-157364 A1 | 24 August 2023 | KR 10-2024-0095315 A | 25 June 2024 |
| | | KR 10-2024-0099365 A | 28 June 2024 |
| | | KR 10-2024-0140112 A | 24 September 2024 |
| | | US 2024-0267841 A1 | 08 August 2024 |
| | | WO 2023-157334 A1 | 24 August 2023 |
| | | WO 2023-157335 A1 | 24 August 2023 |
| | | WO 2023-157363 A1 | 24 August 2023 |
| | | WO 2023-157364 A1 | 24 August 2023 |

Form PCT/ISA/210 (patent family annex) (July 2022)